# EUROPÄISCHE PATENTANMELDUNG

(11) **EP 4 813 760 A2**
(43) Veröffentlichungstag der Anmeldung: **30.09.2026**
(21) Anmeldenummer: 26160277.5
(22) Anmeldetag: 24.02.2026
(51) Int. Cl.: B60R 19/04, B60R 19/34

(54) **HECKAUFPRALLEINHEIT**

(30) Priorität: 03.03.2025 DE 102025108008; 03.06.2025 DE 102025121670
(71) Anmelder: ACPS Automotive GmbH, 74379 Ingersheim (DE)
(72) Erfinder: Krause, Martin, 71696 Möglingen (DE)
(74) Vertreter: Hoeger, Stellrecht & Partner Patentanwälte mbB

(57) **Zusammenfassung**

Um eine Heckaufpralleinheit, welche an einem Fahrzeugheck verdeckt durch eine Stoßfängereinheit montiert oder montierbar ist und welche sich quer zu einer Fahrzeuglängsrichtung sowie quer zu einer Fahrzeuglängsmittelebene erstreckt zu schaffen, die gegebenenfalls die Möglichkeit eröffnet, eine Querträgereinheit für eine Anhängekupplung zu bilden, wird vorgeschlagen, dass die Heckaufpralleinheit zwei im Abstand voneinander angeordnete Kastenstrukturen und einen zwischen diesen angeordneten und diese miteinander verbindenden Mittelträger umfasst, dass eine Querträgereinheit aus Mittelträger und Kastenstrukturen durch Fixieren der Kastenstrukturen an dem Fahrzeugheck montierbar ist und dass sich die Kastenstrukturen an dem Fahrzeugheck mit an diesem montierbaren Montageelementen abstützen, welche im Crashfall deformierbar sind.

## Beschreibung

Die Erfindung betrifft eine Heckaufpralleinheit, welche an einem Fahrzeugheck verdeckt durch eine Stoßfängereinheit montiert oder montierbar ist und welche sich quer zu einer Fahrzeuglängsrichtung sowie quer zu einer Fahrzeuglängsmittelebene erstreckt.

Derartige Heckaufpralleinheiten sind aus dem Stand der Technik bekannt.

Bei diesen besteht das Problem, dass diese nicht dazu geeignet sind, gegebenenfalls als Querträgereinheit für eine Anhängekupplung zu dienen.

Der Erfindung liegt daher die Aufgabe zugrunde, eine Heckaufpralleinheit zu schaffen, die gegebenenfalls die Möglichkeit eröffnet, eine Querträgereinheit für eine Anhängekupplung zu bilden.

Diese Aufgabe wird bei einer Heckaufpralleinheit der eingangs beschriebenen Art erfindungsgemäß dadurch gelöst, dass die Heckaufpralleinheit zwei im Abstand voneinander angeordnete Kastenstrukturen und einen zwischen diesen angeordneten und diese miteinander verbindenden Mittelträger umfasst, dass eine Querträgereinheit aus Mittelträger und Kastenstrukturen durch Fixieren der Kastenstrukturen an dem Fahrzeugheck montierbar ist und dass sich die Kastenstrukturen an dem Fahrzeugheck mit an diesem montierbaren Montageelementen abstützen, welche im Crashfall deformierbar sind.

Der Vorteil der erfindungsgemäßen Lösung ist darin zu sehen, dass die Heckaufpralleinheit zur Absorption von Crash-Energie geeignet ist und somit serienmäßig in Fahrzeuge verbaut werden kann, und im Falle dass eine Anhängekupplung gewünscht ist, mit einem Kugelhals versehen werden kann.

Dabei ist die Querträgereinheit insbesondere im Bereich der Kastenstrukturen deformierbar, es ist aber auch eine Variante möglich, bei welcher der Mittelträger zu Crash-Absorption geeignet ist.

Besonders günstig ist es bei der erfindungsgemäßen Lösung, wenn der Mittelträger fest mit den Kastenstrukturen verbunden ist und wenn insbesondere auf diesen einwirkende Kräfte in die Kastenstrukturen und von diesen gegebenenfalls in das Fahrzeugheck eingeleitet werden.

Dies lässt sich besonders günstig dadurch realisieren, dass das Montageelement eine an eine Montagefläche des Fahrzeughecks angepasste Stützfläche aufweist, um möglichst flächenhaft auf die Stützfläche des Fahrzeughecks einzuwirken.

Ferner ist vorzugsweise vorgesehen, dass das Montageelement mehrere, die Stützfläche bildende zusammenhängende Stützsegmente aufweist, über welche eine Krafteinleitung in die Montagefläche erfolgt.

Zur optimalen Aufnahme eines Crash ist vorgesehen, dass jede Kastenstruktur ein dem Montageelement abgewandtes Aufprallelement aufweist, welches in der Lage ist, bei einem Heckcrash die beim Aufprall auf die Kastenstruktur wirksamen Kräfte aufzunehmen.

Auch in diesem Fall ist vorzugsweise vorgesehen, dass das jeweilige Aufprallelement durch zusammenhängende Aufprallsegmente gebildet ist, um einerseits zu einer Gewichtsersparnis der Heckaufpralleinheit beizutragen, andererseits jedoch aber auch eine ausreichende Stabilität zur Aufnahme des Aufpralls aufzuweisen.

Hinsichtlich der Ausbildung der Kastenstrukturen wurden bislang keine näheren Angaben gemacht.

So sieht eine vorteilhafte Lösung vor, dass die Kastenstrukturen jeweils zwischen dem Aufprallelement und dem Montageelement angeordnete Strebenstrukturen aufweisen, die insbesondere in der Lage sind, die Aufprallenergie durch Deformation zu absorbieren.

Dabei ist zweckmäßigerweise vorgesehen, dass die Kastenstrukturen jeweils mindestens zwei im Abstand voneinander zwischen dem Aufprallelement und dem Montageelement verlaufende Strebenelemente aufweisen, die zur Aufnahme und Absorption der Aufprallenergie zumindest bei einem niederenergetischen Heckcrash dienen können.

Hinsichtlich der Ausbildung der Strebenelemente wurden im Zusammenhang mit der bisherigen Erläuterung der Erfindung keine näheren Angaben gemacht.

So sieht ein vorteilhaftes Ausführungsbeispiel vor, dass eines der Strebenelemente dem Mittelträger zugewandt und mit diesem verbunden ist.

Insbesondere ist dabei das mindestens eine Strebenelement so ausgebildet, dass dieses quer zu der Erstreckungsrichtung des Mittelträgers verläuft.

Besonders vorteilhaft ist es, wenn die Kastenstrukturen mindestens zwei im Abstand voneinander angeordnete und quer zur Erstreckungsrichtung des Mittelträgers verlaufende Strebenelemente aufweisen.

Darüber hinaus ist zur optimalen Energieabsorption vorgesehen, dass die Kastenstrukturen mindestens ein ungefähr parallel zu der Erstreckungsrichtung des Mittelträgers verlaufendes Strebenelement aufweisen.

Dabei ist für eine vorteilhafte Energieabsorption insbesondere vorgesehen, dass jede der Kastenstrukturen mindestens zwei im Abstand voneinander angeordnete und ungefähr parallel zur Erstreckungsrichtung des Mittelträgers verlaufende Strebenelemente aufweist.

Um das Fahrzeugheck möglichst zu schonen, ist vorzugsweise vorgesehen, dass das Montageelement eine größere Verformungssteifigkeit für die plastische Verformung aufweist als alle Strebenelemente der Kastenstrukturen.

Die Verformungssteifigkeit für die plastische Verformung resultiert dabei aus den für die Geometrie des Teils und den für die Fließ- und Streckgrenze des Materials dieses Teils relevanten Parametern.

Insbesondere ist vorgesehen, dass mindestens eines der quer zur Erstreckungsrichtung des Mittelträgers verlaufenden Strebenelemente eine größere Verformungssteifigkeit für die plastische Verformung aufweist als mindestens eines der ungefähr parallel zur Erstreckungsrichtung des Mittelträgers verlaufenden Strebenelemente.

Ferner ist zur optimalen Crashabsorption vorgesehen, dass mindestens eines der quer zur Erstreckungsrichtung des Mittelträgers verlaufenden Strebenelemente eine größere Verformungssteifigkeit für die plastische Verformung aufweist als mindestens eines der ungefähr parallel zur Erstreckungsrichtung des Mittelträgers verlaufenden Strebenelemente.

Des Weiteren wurden bislang keine Angaben zur Verformungssteifigkeit des Aufprallelements gemacht.

Dabei ist vorzugsweise vorgesehen, dass das Aufprallelement eine geringere Verformungssteifigkeit für die plastische Verformung aufweist als das Montageelement.

Ferner ist vorgesehen, dass das Aufprallelement eine geringere Verformungssteifigkeit für die plastische Verformung aufweist als das mindestens eine sich quer zur Erstreckungsrichtung des Mittelträgers erstreckende Strebenelement.

Hierdurch lässt sich mittels der erfindungsgemäßen Kastenstruktur die Absorption der Aufprallenergie in dieser optimiert gestalten.

Zur Gewichtsersparnis der Heckaufpralleinheit hat es sich als vorteilhaft erwiesen, wenn mindestens eines der Strebenelemente um einen Durchbruch herum verlaufende Strebensegmente aufweist.

Besonders günstig ist es, wenn jedes Strebenelement um einen Durchbruch herum verlaufende Strebensegmente aufweist.

Ferner ist dabei ebenfalls vorgesehen, dass das Montageelement um einen Durchbruch herum verlaufende flächig ausgebildete Stützsegmente aufweist, um trotz großer Flächenausdehnung eine Gewichtsersparnis zu erhalten.

Des Weiteren ist vorzugsweise vorgesehen, dass das Aufprallelement um einen Durchbruch herum verlaufende flächig ausgebildete Aufprallsegmente aufweist, um ebenfalls bei großer Flächenausdehnung eine Gewichtsersparnis zu erreichen.

Hinsichtlich einer optimalen Krafteinleitung von dem Mittelträger auf das Montageelement hat es sich als zweckmäßig erwiesen, dass das den Mittelträger tragende Strebenelement einstückig mit dem Montageelement verbunden ist.

Insbesondere ist dabei vorgesehen, dass der Mittelträger mit den Strebensegmenten des diesen tragenden Strebenelements formschlüssig oder stoffschlüssig verbunden ist, wobei der Mittelträger insbesondere mit allen Strebensegmenten formschlüssig und/oder stoffschlüssig verbunden ist, um eine optimale Krafteinleitung zu erreichen.

Um die Kräfte von den Montageelementen möglichst schonend in das Fahrzeugheck einzuleiten, ist vorzugsweise vorgesehen, dass das Montageelement eine größere Flächenausdehnung aufweist als das Aufprallelement.

Um insbesondere im Fall eines Aufpralls die Kräfte optimal auf das Montageelement und von diesem auf das Fahrzeugheck zu übertragen, ist vorgesehen, dass Strebensegmente, der sich zwischen dem Aufprallelement und dem Montageelement erstreckenden Strebenelemente, insbesondere der sich quer zu der Erstreckungsrichtung des Mittelträgers erstreckenden Strebenelemente, mit Bereichen des Montageelements verbunden sind, in denen Montagepunkte zur Fixierung des jeweiligen Montageelements an dem Fahrzeugheck liegen.

Insbesondere ist dabei vorgesehen, dass das Montageelement mit mindestens einem Strebenelement, insbesondere einem quer zur Erstreckungsrichtung des Mittelträgers erstreckenden Strebenelement, einstückig verbunden ist.

Noch vorteilhafter ist es, wenn das Aufprallelement mit mindestens einem Strebenelement einstückig verbunden ist.

Ferner wird eine optimale Crashabsorption dann erreicht, wenn die Strebenelemente einen zwischen dem Aufprallelement und dem Montageelement liegenden Hohlraum umschließen.

Hinsichtlich der Ausbildung des Mittelträgers wurden bislang keine näheren Angaben gemacht.

So sieht eine zweckmäßige Lösung vor, dass der Mittelträger ein sich zwischen den Kastenstrukturen erstreckendes rohrähnliches oder als Profilelement ausgebildetes Teil ist, insbesondere ohne spezifische crashabsorbierende Geometrie.

**In** diesem Fall ist der Mittelträger entsprechend einer konventionellen Querträgereinheit ausgebildet und lediglich die Kastenstrukturen dienen dazu, die Crashenergie bei einem Heckcrash aufzunehmen.

Eine andere vorteilhafte Lösung sieht vor, dass der Mittelträger als Kastenkörper ausgebildet ist und somit insbesondere crashabsorbierend ausgebildet ist.

In diesem Fall ist der Mittelträger so ausgebildet, dass er zusätzlich gegebenenfalls in der Lage ist, Crashenergie zu absorbieren und insbesondere optimal auf den Kastenkörper zu übertragen.

Besonders vorteilhaft ist es dabei, wenn der Mittelträger ein fahrbahnabgewandtes Wandelement und ein fahrbahnzugewandtes Wandelement aufweist, wobei diese insbesondere zur Steifigkeit des Kastenkörpers beitragen.

Vorzugsweise ist dabei vorgesehen, dass der Mittelträger ein fahrbahnzugewandtes Wandelement aufweist, das sich zwischen den Kastenstrukturen erstreckt und mit diesen verbunden ist.

Ferner ist vorzugsweise vorgesehen, dass der Mittelträger ein fahrbahnabgewandtes Wandelement aufweist, das sich zwischen den Kastenstrukturen erstreckt und mit diesen verbunden ist.

Des Weiteren ist zur Stabilisierung des Kastenkörpers vorgesehen, dass der Mittelträger ein fahrzeugabgewandtes Wandelement aufweist, das sich zwischen den Kastenstrukturen erstreckt und mit diesen verbunden ist.

Des Weiteren ist vorzugsweise vorgesehen, dass der Mittelträger ein fahrzeugzugewandtes Wandelement aufweist, das sich zwischen den Kastenstrukturen erstreckt und insbesondere mit diesen verbunden ist.

Dabei dienen das fahrzeugabgewandte und das fahrzeugzugewandte Wandelement insbesondere zur Versteifung der fahrbahnzu- oder abgewandten Wandelemente.

Vorzugsweise ist dabei vorgesehen, dass das fahrzeugabgewandte Wandelement und das fahrzeugzugewandte Wandelement durch ein zentral zwischen den Kastenstrukturen liegendes Verbindungsteil miteinander verbunden sind.

Aus fertigungstechnischen Gründen ist es von Vorteil, wenn das fahrzeugabgewandte Wandelement aus zwei Wandelementteilen gebildet ist.

Desgleichen ist es fertigungstechnisch von Vorteil, wenn das fahrzeugzugewandte Wandelement aus zwei Wandelementteilen gebildet ist.

Hinsichtlich der Fertigungsmöglichkeit hat es sich als besonders günstig erwiesen, wenn mindestens ein fahrzeugzugewandtes Wandelementteil und ein diesem gegenüberliegendes fahrzeugabgewandtes Wandelementteil durch ein sich zwischen diesen erstreckendes Verbindungselement verbunden sind, welches diese Wandelementteile im Abstand von den Kastenstrukturen relativ zueinander versteift.

Für die Fertigungsmöglichkeiten hat es sich als besonders vorteilhaft erwiesen, wenn das fahrzeugzugewandte Wandelementteil und das fahrzeugabgewandte Wandelementteil und das Verbindungselement einstückig miteinander verbunden sind.

Grundsätzlich wäre es ausreichend, wenn ein fahrzeugzugewandtes Wandelementteil und ein fahrzeugabgewandtes Wandelementteil miteinander durch ein Verbindungsteil verbunden sind, während das andere fahrzeugzugewandte Wandelementteil und das andere fahrzeugabgewandte Wandelementteil jeweils mit dem zugehörigen Wandelementteil als separates Teil verbunden sind.

Als besonders günstig hat es sich jedoch erwiesen, wenn beide fahrzeugzugewandten Wandelementteile und die diesen jeweils zugewandten fahrzeugabgewandten Wandelementteile jeweils durch ein Verbindungsteil miteinander verbunden sind.

Insbesondere ist es dabei vorteilhaft, wenn die Verbindungsteile aneinander anliegen und insbesondere miteinander verbunden sind.

Grundsätzlich können die Verbindungsteile lediglich zur Versteifung des Kastenkörpers dienen.

Im Fall der vorgesehenen Montage einer Anhängekupplung hat es sich jedoch als vorteilhaft erwiesen, wenn die Verbindungsteile einen Montageflansch für eine Anhängekupplung bilden.

Um ferner eine optimale Versteifung des Kastenkörpers zu erreichen, ist vorgesehen, dass die fahrzeugabgewandten Wandelementteile und die fahrzeugzugewandten Wandelementteile durch ein fahrbahnabgewandtes und/oder ein fahrbahnzugewandtes Wandelement miteinander verbunden sind.

Eine andere vorteilhafte Lösung sieht vor, dass zwischen den fahrbahnzugewandten und den fahrbahnabgewandten Wandelementen sowie den fahrzeugzugewandten und den fahrzeugabgewandten Wandelementen ein mittiges Wandelement angeordnet ist.

Hinsichtlich einer optimalen Stabilität ist alternativ dazu vorgesehen, dass mindestens ein, insbesondere mehrere Versteifungselemente quer zwischen dem fahrbahnabgewandten Wandelement und dem fahrbahnzugewandten Wandelement verlaufen.

Insbesondere lässt sich die Steifigkeit des Kastenkörpers noch dadurch verbessern, dass zwischen den fahrbahnzugewandten und den fahrbahnabgewandten Wandelementen sowie den fahrzeugzugewandten und den fahrzeugabgewandten Wandelementen ein mittiges Wandelement angeordnet ist.

Ferner ist vorzugsweise vorgesehen, dass mindestens ein, insbesondere mehrere Versteifungselemente quer zu den fahrbahnabgewandten und den fahrbahnzugewandten Wandelementen sowie dem mittigen Wandelement verlaufen.

Eine weitere vorteilhafte Lösung sieht vor, dass mindestens eines der Wandelemente des Kastenkörpers, umfassend das fahrbahnabgewandte Wandelement und das fahrbahnzugewandte Wandelement, mit mindestens einem der Wandelemente des Kastenkörpers, umfassend das fahrzeugabgewandte Wandelement und das fahrzeugzugewandte Wandelement aus einer Materialtafel hergestellt und zumindest abschnittsweise einstückig miteinander verbunden sind.

Der Vorteil dieser Lösung ist dabei darin zu sehen, dass damit zumindest zwei der Wandelemente aufgrund der Herstellung aus einer und derselben Materialtafel zumindest abschnittsweise einstückig miteinander verbunden sind und somit als zusammenhängende Wandelemente Teil des Kastenkörpers sind.

Besonders günstig ist es, wenn mindestens drei der Wandelemente aus einer einzigen Materialtafel hergestellt und zumindest abschnittsweise einstückig miteinander verbunden sind, so dass dadurch bereits drei Wandelemente ein einziges Teil zur Weiterverarbeitung bilden.

Hinsichtlich der Ausbildung der Wandelemente selbst wurden bislang keine näheren Angaben gemacht.

So ist es beispielsweise denkbar, dass jedes der Wandelemente als ein einziges zusammenhängendes Teil ausgebildet ist.

Eine weitere vorteilhafte Lösung sieht vor, dass mindestens eines der Wandelemente mehrteilig ausgebildet ist und ein Mittelteil sowie Seitenteile aufweist, um diese einfach an eine gewünschte Form des Kastenkörpers anpassen zu können.

Eine derartige Ausbildung des Wandelements hat den Vorteil, dass die Seitenteile relativ zum Mittelteil anders ausgerichtet werden können.

Beispielsweise ist dabei vorgesehen, dass die Seitenteile mit zwei einander gegenüberliegenden Wandelementen verbunden, insbesondere verschweißt, sind und damit die Seitenteile selbst nicht einstückig mit einem weiteren Wandelement verbunden sein müssen.

Eine weitere vorteilhafte Lösung sieht vor, dass mindestens eines der Mittelteile einstückig mit mindestens einem der an dieses anschließenden Wandelemente verbunden ist.

Besonders günstig ist es, wenn das mindestens eine der Mittelteile mit zwei einander gegenüberliegenden und an dieses anschließenden Wandelementen verbunden ist, so dass das Mittelteil zwischen diesen Wandelementen liegt.

Hinsichtlich der Seitenteile ist ferner vorgesehen, dass die Seitenteile außerhalb einer durch das Mittelteil vorgegebenen Fläche verlaufen, um die Formstabilität des Kastenkörpers zu verbessern.

Das heißt, dass sich das Mittelteil beispielsweise in einer Fläche erstreckt und die Seitenteile jeweils in von dieser Fläche abweichenden Fläche.

Dabei ist beispielsweise vorgesehen, dass die Seitenteile relativ zum Mittelteil gebogen sind, beispielsweise dass das Mittelteil durch eine Biegekante in die Seitenteile übergeht.

Eine weitere vorteilhafte Lösung sieht vor, dass die Seitenteile einstückig mit dem mindestens einen Mittelteil verbunden sind und somit nach wie vor zusammen mit dem mindestens einen Mittelteil ein einziges Wandelement bilden.

Alternativ dazu ist vorgesehen, dass mindestens eines der Mittelteile mit den Seitenteilen durch Formschlusselemente verbunden ist, um somit die Möglichkeit zu eröffnen, das Mittelteil und die Seitenteile unabhängig voneinander am Kastenkörper zu montieren.

Des Weiteren ist zweckmäßigerweise vorgesehen, dass mindestens eines der Mittelteile durch Formschlusselemente mit mindestens einem der angrenzenden Wandelemente verbunden ist.

Vorzugsweise ist das Mittelteil durch Formschlusselemente mit beiden an dieses angrenzenden Wandelementen verbunden.

Dies schafft die Möglichkeit, das Mittelteil unabhängig von den Seitenteilen zu montieren und somit beispielsweise eine Montageöffnung für die Montage einer Schwenkeinheit an einem Montageflansch im Innern des Kastenkörpers zu eröffnen.

Insbesondere ist im Fall des Kastenkörpers vorgesehen, dass das fahrbahnabgewandte Wandelement und das fahrbahnzugewandte Wandelement eine größere Verformungssteifigkeit für plastische Verformung aufweisen als das fahrzeugabgewandte Wandelement und das fahrzeugzugewandte Wandelement.

Die vorstehende Beschreibung erfindungsgemäßer Lösungen umfasst somit insbesondere die durch die nachfolgend durchnummerierten Ausführungsformen definierten verschiedenen Merkmalskombinationen.
1. Heckaufpralleinheit (20), welche an einem Fahrzeugheck (14) verdeckt durch eine Stoßfängereinheit (16) montiert oder montierbar ist und welche sich quer zu einer Fahrzeuglängsrichtung (36) sowie quer zu einer Fahrzeuglängsmittelebene (18) erstreckt, wobei die Heckaufpralleinheit (20) zwei im Abstand voneinander angeordnete Kastenstrukturen (24, 26) und einen zwischen diesen angeordneten und diese miteinander verbindenden Mittelträger (22) umfasst, dass eine Querträgereinheit (30) aus Mittelträger (22) und Kastenstrukturen (24, 26) durch Fixieren der Kastenstrukturen (24, 26) an dem Fahrzeugheck (14) montierbar ist und dass sich die Kastenstrukturen (24, 26) an dem Fahrzeugheck (14) mit an diesem montierbaren Montageelementen (32) abstützen, welche die im Crashfall deformierbare Querträgereinheit (30) tragen.
2. Heckaufpralleinheit (20) nach Ausführungsform 1, wobei der Mittelträger (22) fest mit den Kastenstrukturen (24, 26) verbunden ist und dass insbesondere auf diesen einwirkende Kräfte in die Kastenstrukturen (24, 26) von diesen gegebenenfalls in das Fahrzeugheck (14) eingeleitet werden.
3. Heckaufpralleinheit (20) nach einer der voranstehenden Ausführungsformen, wobei das Montageelement (32) eine an eine Montagefläche (34) des Fahrzeughecks (14) angepasste Stützfläche (62) aufweist.
4. Heckaufpralleinheit (20) nach einer der Ausführungsformen 1 bis 3, wobei das Montageelement (32) mehrere, die Stützfläche (62) bildende zusammenhängende Stützsegmente (64, 66, 72, 74) aufweist.
5. Heckaufpralleinheit (20) nach einer der voranstehenden Ausführungsformen, wobei jede Kastenstruktur (24, 26) ein dem Montageelement (32) abgewandtes Aufprallelement (48) aufweist.
6. Heckaufpralleinheit (20) nach Ausführungsform 5, wobei das jeweilige Aufprallelement (48) durch zusammenhängende Aufprallsegmente (152, 154, 156, 158) gebildet ist.
7. Heckaufpralleinheit (20) nach einer der voranstehenden Ausführungsformen, wobei die Kastenstrukturen (24, 26) jeweils zwischen dem Aufprallelement (48) und dem Montageelement (32) angeordnete Strebenelemente (44, 46, 54, 56) aufweisen.
8. Heckaufpralleinheit (20) nach Ausführungsform 7, wobei die Kastenstrukturen (24, 26) jeweils mindestens zwei im Abstand voneinander zwischen dem Aufprallelement (48) und dem Montageelement (32) verlaufende Strebenelemente (44, 46) aufweisen.
9. Heckaufpralleinheit (20) nach Ausführungsform 7 oder 8, wobei mindestens eines der Strebenelemente (44) dem Mittelträger (22) zugewandt und mit diesem verbunden ist.
10. Heckaufpralleinheit (20) nach einer der Ausführungsformen 7 bis 9, wobei mindestens eines der Strebenelemente (44, 46) quer zu der Erstreckungsrichtung (28) des Mittelträgers (22) verläuft.
11. Heckaufpralleinheit (20) nach einer der Ausführungsformen 7 bis 10, wobei die Kastenstrukturen (24, 26) mindestens zwei im Abstand voneinander angeordnete und quer zur Erstreckungsrichtung (28) des Mittelträgers (22) verlaufende Strebenelemente (44, 46) aufweisen.
12. Heckaufpralleinheit (20) nach einer der voranstehenden Ausführungsformen, wobei die Kastenstrukturen (24, 26) mindestens ein ungefähr parallel zu der Erstreckungsrichtung (28) des Mittelträgers (22) verlaufendes Strebenelement (54, 56) aufweisen.
13. Heckaufpralleinheit (20) nach Ausführungsform 12, wobei jede der Kastenstrukturen (24, 26) mindestens zwei im Abstand voneinander angeordnete und ungefähr parallel zur Erstreckungsrichtung (28) des Mittelträgers (22) verlaufende Strebenelemente (54, 56) aufweist.
14. Heckaufpralleinheit (20) nach einer der voranstehenden Ausführungsformen, wobei das Montageelement (32) eine größere Verformungssteifigkeit für die plastische Verformung als alle Strebenelemente (44, 46, 54, 56) der Kastenstrukturen (24, 26) aufweist.
15. Heckaufpralleinheit (20) nach Ausführungsform 14, wobei mindestens eines der quer zur Erstreckungsrichtung (28) des Mittelträgers (22) verlaufenden Strebenelemente (44, 46) eine größere Verformungssteifigkeit für die plastische Verformung aufweist als mindestens eines der ungefähr parallel zur Erstreckungsrichtung (28) des Mittelträgers (22) verlaufenden Strebenelemente (54, 56).
16. Heckaufpralleinheit (20) nach Ausführungsform 14 oder 15, wobei mindestens eines der quer zur Erstreckungsrichtung (28) des Mittelträgers (22) verlaufenden Strebenelemente (44, 46) eine größere Verformungssteifigkeit für die plastische Verformung aufweist als mindestens eines der ungefähr parallel zur Erstreckungsrichtung (28) des Mittelträgers verlaufenden Strebenelemente (54, 56).
17. Heckaufpralleinheit (20) nach einer der voranstehenden Ausführungsformen, wobei das Aufprallelement (48) eine geringere Verformungssteifigkeit für die plastische Verformung aufweist als das Montageelement (32).
18. Heckaufpralleinheit (20) nach einer der voranstehenden Ausführungsformen, wobei das Aufprallelement (48) eine geringere Verformungssteifigkeit für die plastische Verformung aufweist als das mindestens eine sich quer zur Erstreckungsrichtung (28) des Mittelträgers (22) erstreckende Strebenelement (44).
19. Heckaufpralleinheit (20) nach einer der voranstehenden Ausführungsformen, wobei mindestens eines der Strebenelemente (44, 46, 54, 56) um einen Durchbruch (76) herum verlaufende Strebensegmente (110, 112, 114, 116) aufweist.
20. Heckaufpralleinheit (20) nach Ausführungsform 19, wobei jedes Strebenelement (44, 46, 54, 56) um einen Durchbruch (110, 112, 114, 116) herum angeordnete Strebensegmente (92, 94, 96, 98, 122, 124, 126, 128, 132, 134, 136, 138) aufweist.
21. Heckaufpralleinheit (20) nach einer der voranstehenden Ausführungsformen, wobei das Montageelement (32) um einen Durchbruch (76) herum verlaufende flächig ausgebildete Stützsegmente (64, 66, 72, 74) aufweist.
22. Heckaufpralleinheit (20) nach einer der voranstehenden Ausführungsformen, wobei das Aufprallelement (48) um einen Durchbruch (162) herum verlaufende flächig ausgebildete Aufprallsegmente (152, 154, 156, 158) aufweist.
23. Heckaufpralleinheit (20) nach einer der voranstehenden Ausführungsformen, wobei das den Mittelträger (22) tragende Strebenelement (44) einstückig mit dem Montageelement (32) verbunden ist.
24. Heckaufpralleinheit nach einer der voranstehenden Ausführungsformen, wobei der Mittelträger (22) mit den Strebensegmenten (92, 96, 102, 104) des diesen tragenden Strebenelements (44) formschlüssig und/oder stoffschlüssig verbunden ist.
25. Heckaufpralleinheit (20) nach einer der voranstehenden Ausführungsformen, wobei das Montageelement (32) eine größere Flächendehnung aufweist als das Aufprallelement (48).
26. Heckaufpralleinheit (20) nach einer der Ausführungsformen 7 bis 25, wobei die Strebensegmente (92, 94, 96, 98) der sich zwischen dem Aufprallelement (48) und dem Montageelement (32) erstreckenden Strebenelemente (44, 46) mit Bereichen des Montageelements (32) verbunden sind, in denen Montagepunkte (82, 84, 86, 88) zur Fixierung des jeweiligen Montageelements (32) an dem Fahrzeugheck (14) liegen.
27. Heckaufpralleinheit (20) nach einer der Ausführungsformen 7 bis 26, wobei das Montageelement (32) mit mindestens einem Strebenelement (44, 46) einstückig verbunden ist.
28. Heckaufpralleinheit (20) nach einer der Ausführungsformen 7 bis 27, wobei das Aufprallelement (48) mit mindestens einem Strebenelement (44, 46) einstückig verbunden ist.
29. Heckaufpralleinheit (20) nach einer der Ausführungsformen 7 bis 28, wobei die Strebenelemente (44, 46, 54, 56) einen zwischen dem Aufprallelement (48) und dem Montageelement (32) liegenden Hohlraum (142) umschließen.
30. Heckaufpralleinheit (20) nach einer der voranstehenden Ausführungsformen, wobei der Mittelträger (22) ein sich zwischen den Kastenstrukturen (24, 26) erstreckendes rohrähnliches oder als Profilelement ausgebildetes Teil ist.
31. Heckaufpralleinheit (20) nach einer der Ausführungsformen 1 bis 30, wobei der Mittelträger (222) als Kastenkörper (224) ausgebildet ist.
32. Heckaufpralleinheit (20) nach Ausführungsform 31, wobei der Mittelträger (22) ein fahrbahnabgewandtes Wandelement (232) und ein fahrbahnzugewandtes Wandelement (234) aufweist.
33. Heckaufpralleinheit (20) nach Ausführungsform 31 oder 32, wobei der Mittelträger (222) ein fahrbahnabgewandtes Wandelement (232) aufweist, das sich zwischen den Kastenstrukturen (24, 26) erstreckt und mit diesen verbunden ist.
34. Heckaufpralleinheit (20) nach Ausführungsform 31 bis 33, wobei der Mittelträger (222) ein fahrbahnzugewandtes Wandelement (234) aufweist, das sich zwischen den Kastenstrukturen (24, 26) erstreckt und mit diesen verbunden ist.
35. Heckaufpralleinheit (20) nach einer der Ausführungsformen 31 bis 34, wobei der Mittelträger (222) ein fahrzeugabgewandtes Wandelement (236) aufweist, das sich zwischen den Kastenstrukturen (24, 26) erstreckt.
36. Heckaufpralleinheit (20) nach einer der Ausführungsformen 31 bis 35, wobei der Mittelträger (222) ein fahrzeugzugewandtes Wandelement (238) aufweist, das sich zwischen den Kastenstrukturen (24, 26) erstreckt.
37. Heckaufpralleinheit (20) nach einer der Ausführungsformen 31 bis 36, wobei das fahrzeugabgewandte Wandelement (236) und das fahrzeugzugewandte Wandelement (238) durch ein zentral zwischen den Kastenstrukturen (24, 26) liegendes Verbindungsteil (246) miteinander verbunden sind.
38. Heckaufpralleinheit (20) nach einer der Ausführungsformen 31 bis 37, wobei das fahrzeugabgewandte Wandelement (236) aus zwei Wandelementteilen (354, 364) gebildet ist.
39. Heckaufpralleinheit (20) nach einer der Ausführungsformen 31 bis 38, wobei das fahrzeugzugewandte Wandelement (238) aus zwei Wandelementteilen (356, 366) gebildet ist.
40. Heckaufpralleinheit (20) nach einer der Ausführungsformen 37 bis 39 wobei mindestens ein fahrzeugzugewandtes Wandelementteil (356, 366) und ein diesem gegenüberliegendes fahrzeugabgewandtes Wandelementteil (354, 364) durch ein sich zwischen diesen erstreckendes Verbindungselement (358, 368) verbunden sind, welches diese Wandelementteile (354, 356, 364, 366) im Abstand von den Kastenstrukturen (24, 26) relativ zueinander versteift.
41. Heckaufpralleinheit (20) nach Ausführungsform 40, wobei das fahrzeugzugewandte Wandelementteil und das fahrzeugabgewandte Wandelementteil und das Verbindungselement (358, 368) einstückig miteinander verbunden sind.
42. Heckaufpralleinheit (20) nach Ausführungsform 40 oder 41, wobei beide fahrzeugzugewandten Wandelementteile (356, 366) und die jeweils diesen zugewandten fahrzeugabgewandten Wandelementteile (354, 364) jeweils durch ein Verbindungsteil (358, 368) miteinander verbunden sind.
43. Heckaufpralleinheit (20) nach Ausführungsform 42, wobei die Verbindungsteile (358, 368) aneinander anliegen.
44. Heckaufpralleinheit (20) nach Ausführungsform 42 oder 43, wobei die Verbindungsteile (358, 368) einen Montageflansch (374) für eine Anhängekupplung bilden.
45. Heckaufpralleinheit (20) nach einer der Ausführungsformen 31 bis 44, wobei das die fahrzeugabgewandten Wandelementteile (354, 364) und die fahrzeugzugewandten Wandelementteile (356, 366) durch ein fahrbahnabgewandtes und/oder fahrbahnzugewandtes Wandelement (232, 234) miteinander verbunden sind.
46. Heckaufpralleinheit nach einer der Ausführungsformen 31 bis 45, wobei mindestens ein, insbesondere mehrere Versteifungselemente (394, 396) quer zwischen dem fahrbahnabgewandten Wandelement (232) und dem fahrbahnzugewandten Wandelement (234) verlaufen.
47. Heckaufpralleinheit (20) nach einer der Ausführungsformen 31 bis 46, wobei zwischen den fahrbahnzugewandten und den fahrbahnabgewandten Wandelementen (232, 234) sowie den fahrzeugzugewandten und den fahrzeugabgewandten Wandelementen (236, 238) ein mittiges Wandelement (392) angeordnet ist.
48. Heckaufpralleinheit (20) nach Ausführungsform 46 oder 47, wobei mindestens ein, insbesondere mehrere Versteifungselemente (394, 396) quer zu den fahrbahnabgewandten und fahrbahnzugewandten Wandelementen (232, 234) sowie dem mittigen Wandelement (392) verlaufen.
49. Heckaufpralleinheit nach einer der Ausführungsformen 31 bis 48, wobei mindestens eines der Wandelemente, umfassend das fahrbahnabgewandte Wandelement (232) und das fahrbahnzugewandte Wandelement (234), mit mindestens einem der Wandelemente, umfassend das fahrzeugabgewandte Wandelement (236) und das fahrzeugzugewandte Wandelement (238), aus einer Materialtafel hergestellt und zumindest abschnittsweise einstückig miteinander verbunden sind.
50. Heckaufpralleinheit nach Ausführungsform 49, wobei mindestens drei der Wandelemente (232‴, 234"', 236‴, 238‴) aus einer Materialtafel hergestellt und zumindest abschnittsweise einstückig miteinander verbunden sind.
51. Heckaufpralleinheit nach Ausführungsform 49 oder 50, wobei mindestens eines der Wandelemente (232"', 234‴, 236‴, 238"') mehrteilig ausgebildet ist und ein Mittelteil (402, 412) sowie Seitenteile (404, 406, 414, 416) aufweist.
52. Heckaufpralleinheit nach Ausführungsform 51, wobei die Seitenteile (404, 406, 414, 416) mit zwei einander gegenüberliegenden Wandelementen (232‴, 234"') fest verbunden, insbesondere verschweißt, sind.
53. Heckaufpralleinheit nach einer der Ausführungsformen 51 oder 52, wobei eines der Mittelteile (402) einstückig mit mindestens einem der an dieses anschließenden Wandelemente (232"', 234‴) verbunden ist.
54. Heckaufpralleinheit nach einer der voranstehenden Ausführungsformen 51 bis 53, wobei die Seitenteile (404, 406, 414, 416) außerhalb einer durch das Mittelteil (402, 412) vorgegebenen Fläche verlaufen.
55. Heckaufpralleinheit nach Ausführungsform 54, wobei die Seitenteile (404, 406, 414, 416) relativ zu dem Mittelteil (402, 412) gebogen sind.
56. Heckaufpralleinheit, nach einer der Ausführungsformen 51 bis 55, wobei die Seitenteile (404, 406, 414, 416) einstückig mit einem der Mittelteile (402, 412) verbunden sind.
57. Heckaufpralleinheit nach einer der Ausführungsformen 51 bis 56, wobei mindestens eines der Mittelteile (412) mit den Seitenteilen (414, 416) durch Formschlusselemente (424) verbunden ist.
58. Heckaufpralleinheit nach einer der Ausführungsformen 51 bis 56, wobei mindestens eines der Mittelteile (412) durch Formschlusselemente (422) mit mindestens einem der Wandelemente (232‴, 234"') verbunden ist.
59. Heckaufpralleinheit nach einer der Ausführungsformen 31 bis 58, wobei das fahrbahnabgewandte Wandelement (232) und das fahrbahnzugewandte Wandelement (234) eine größere Verformungssteifigkeit für die plastische Verformung aufweisen als das fahrzeugabgewandte Wandelement (236) und das fahrzeugzugewandte Wandelement (238).

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine Seitenansicht einer Fahrzeugkarosserie eines Fahrzeugs mit einer am Fahrzeugheck angeordneten Stoßfängereinheit;
- Fig. 2: eine rückseitige Ansicht der Fahrzeugkarosserie mit der am Fahrzeugheck angeordneten Stoßfängereinheit und einer von dieser überdeckten Heckaufpralleinheit;
- Fig. 3: eine Darstellung eines ersten Ausführungsbeispiels einer erfindungsgemäßen Heckaufpralleinheit;
- Fig. 4: eine vergrößerte Darstellung der Kastenstruktur gemäß B in Fig. 3;
- Fig. 5: eine Ansicht der Fig. 4 mit Blick in Richtung des Pfeils C in Fig. 4;
- Fig. 6: eine Darstellung ähnlich Fig. 4 eines zweiten Ausführungsbeispiels der Kastenstruktur gemäß dem ersten Ausführungsbeispiel der erfindungsgemäßen Heckaufpralleinheit;
- Fig. 7: eine Ansicht ähnlich Fig. 3 eines dritten Ausführungsbeispiels der Kastenstrukturen zum ersten Ausführungsbeispiel der erfindungsgemäßen Heckaufpralleinheit;
- Fig. 8: eine Ansicht des dritten Ausführungsbeispiels der Kastenstruktur ähnlich Fig. 4;
- Fig. 9: ein viertes Ausführungsbeispiel der Kastenstruktur gemäß Fig. 4;
- Fig. 10: ein fünftes Ausführungsbeispiel der Kastenstruktur gemäß Fig. 4 des ersten Ausführungsbeispiels der erfindungsgemäßen Heckaufpralleinheit;
- Fig. 11: ein sechstes Ausführungsbeispiel der Kastenstruktur gemäß Fig. 4;
- Fig. 12: ein siebtes Ausführungsbeispiel der Kastenstruktur ähnlich Fig. 4 und Fig. 6;
- Fig. 13: eine erste Variante der Heckaufpralleinheit gemäß Fig. 3 mit einem Aufnahmekörper umfassend eine Aufnahme für einen Einsteckabschnitt eines Kupplungselements oder eines Lastenträgers;
- Fig. 14: eine zweite Variante der Heckaufpralleinheit gemäß Fig. 3 mit einer an dem Mittelträger montierten Schwenkeinheit für einen schwenkbaren Kugelhals zur Bildung einer Anhängekupplung;
- Fig. 15: eine Darstellung der zweiten Variante der als Anhängekupplung ausgebildeten Heckaufpralleinheit mit Blick in Richtung des Pfeils E, das heißt von Seiten des Fahrzeughecks;
- Fig. 16: eine Darstellung einer dritten Variante der erfindungsgemäßen Heckaufpralleinheit mit einem Kastenkörper;
- Fig. 17: eine Explosionsdarstellung des Kastenkörpers gemäß Fig. 16;
- Fig. 18: eine vierte Variante einer erfindungsgemäßen Heckaufpralleinheit mit einer Schwenkeinheit zur verschwenkbaren Lagerung eines Kugelhalses versehen ist;
- Fig. 19: eine Darstellung einer fünften Variante der erfindungsgemäßen Heckaufpralleinheit;
- Fig. 20: eine Explosionsdarstellung des Kastenkörpers der fünften Variante der Heckaufpralleinheit gemäß Fig. 19;

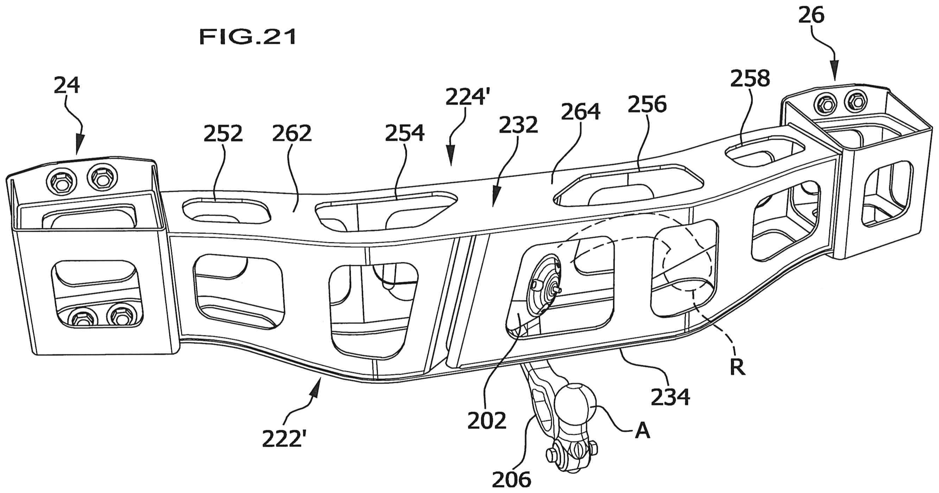

- Fig. 21: eine Darstellung des mit einer Schwenkeinheit für einen schwenkbaren Kugelhals versehenen Kastenkörpers der fünften Variante gemäß Fig. 19 und 20 zur Bildung einer Anhängekupplung;
- Fig. 22: eine sechste Variante einer erfindungsgemäßen Heckaufpralleinheit mit einer Variante des Kastenkörpers, versehen mit einem Aufnahmekörper zur Aufnahme eines Einsteckabschnitts eines Kupplungselements für einen Anhänger oder einen Lastenträger, allerdings ohne Darstellung eines fahrzeugabgewandten Wandelements;
- Fig. 23: eine vollständige Darstellung des Kastenkörpers der sechsten Variante der Heckaufpralleinheit mit in den Aufnahmekörper eingestecktem Einsteckabschnitt eines Kupplungselements für einen Anhänger
- Fig. 24: eine siebte Variante einer erfindungsgemäßen Heckaufpralleinheit mit einer weiteren Variante des Kastenkörpers;
- Fig. 25: eine Explosionsdarstellung des Mittelträgers der siebten Variante gemäß Fig. 24;
- Fig. 26: eine perspektivische Darstellung der siebten Variante der Heckaufpralleinheit gemäß Fig. 24, versehen mit einem Aufnahmekörper zur Aufnahme eines Einsteckabschnitts eines Kuppelelements für einen Anhänger oder einen Lastenträger;
- Fig. 27: eine perspektivische Darstellung der siebten Variante der Heckaufpralleinheit gemäß Fig. 24, versehen mit einer Schwenkeinheit für einen schwenkbaren Kugelhals;
- Fig. 28: eine Explosionsdarstellung des Kastenkörpers der siebten Variante gemäß Fig. 24 mit einem Montageflansch für die Schwenkeinheit;
- Fig. 29: eine achte Variante einer erfindungsgemäßen Heckaufpralleinheit gemäß Fig. 24 mit einem Kastenkörper mit einem mehrteiligen fahrzeugzugewandten Wandelement und
- Fig. 30: eine Explosionsdarstellung der achten Variante der Heckaufpralleinheit gemäß Fig. 29 bei noch nicht montiertem Mittelteil des fahrzeugzugewandten Wandelements.

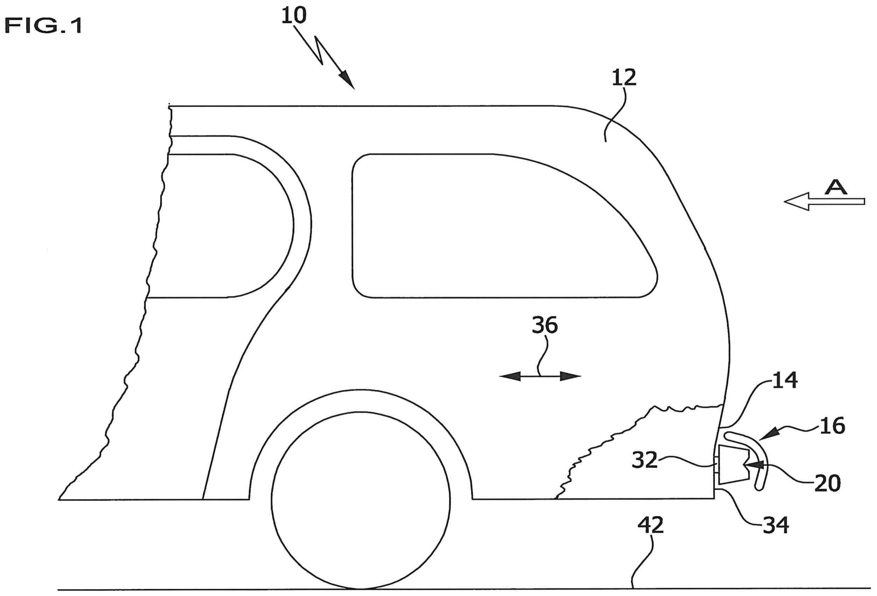

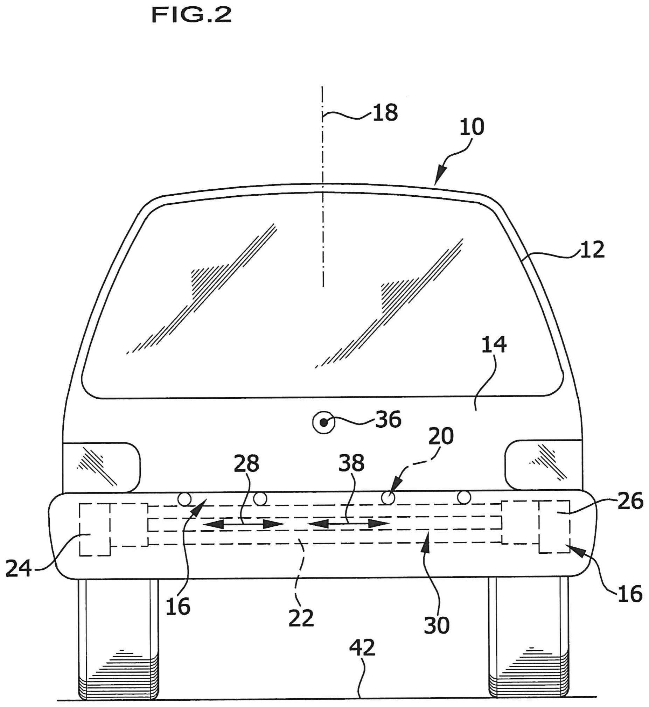

Fig. 1 und 2 zeigen ein Fahrzeug 10, dessen Fahrzeugkarosserie 12 am Fahrzeugheck 14 mit einer Stoßfängereinheit 16 versehen ist, die quer zu einer Fahrzeuglängsmittelebene 18 verläuft.

Verdeckt durch die Stoßfängereinheit 16 ist an dem Fahrzeugheck 14 eine als Ganzes mit 20 bezeichnete Heckaufpralleinheit vorgesehen, die dazu dient, bei einem Heckaufprall Aufprallenergie zu absorbieren.

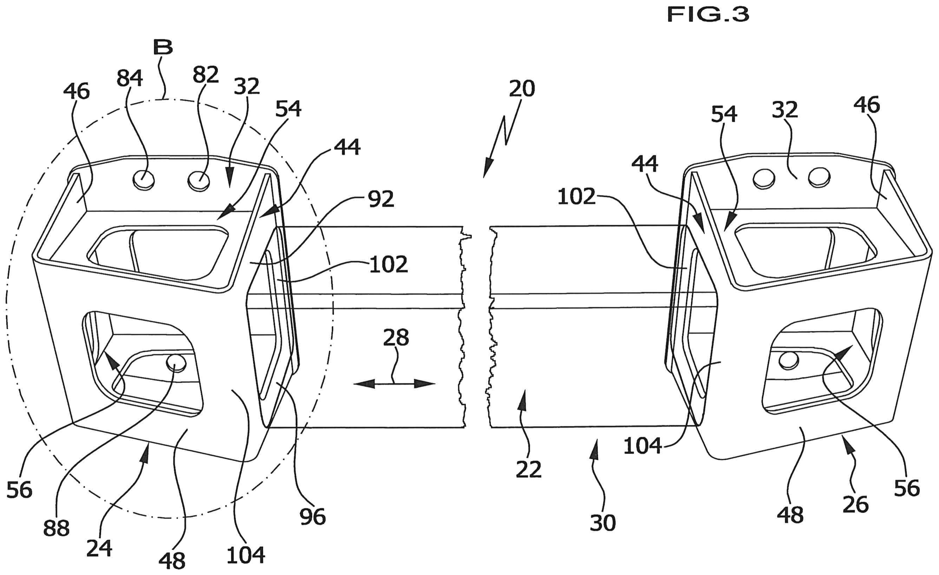

Die Heckaufpralleinheit 20 umfasst einen insbesondere als Rohrkörper oder auch als im Querschnitt L- oder U-förmig oder C-förmig ausgeformtes Profil ausgebildeten Mittelträger 22 (Fig. 2 und 3), welcher zwischen zwei Kastenstrukturen 24 und 26 angeordnet ist, welche einerseits mit dem Mittelträger 22 verbunden sind und diesen tragen und andererseits jeweils mit einem Montageelement 32 verbunden sind, das seinerseits an einer am Fahrzeugheck 14 vorgesehenen Montagefläche 34 montierbar ist und sich auf dieser abstützt (Fig. 1).

Der Mittelträger 22 ist mit den beiderseits angeordneten Kastenstrukturen 24 und 26 unter Bildung einer Querträgereinheit 30 fest verbunden und stützt sich über die Kastenstrukturen 24, 26 an den Montageflächen 34 des Fahrzeughecks 14 ab.

Dabei verläuft sich dann insgesamt der Mittelträger 22 mit seiner Erstreckungsrichtung 28 quer zu einer Fahrzeuglängsrichtung 36, insbesondere quer zu der Fahrzeuglängsmittelebene 18, und in einer Fahrzeugquerrichtung 38, die ungefähr parallel zu einer Fahrbahnoberfläche 42 verläuft, auf welcher das Fahrzeug 10 angeordnet steht.

Ein erstes derartiges, in Fig. 3 dargestelltes Ausführungsbeispiel einer erfindungsgemäßen Heckaufpralleinheit 20 weist identische, jedoch spiegelverkehrt zueinander ausgebildete Kastenstrukturen 24 und 26 auf, von denen jede ausgehend von dem Montageelement 32 eine innenliegende Strebenstruktur 44 aufweist, mit welcher der Mittelträger 22 fest verbunden ist, und die sich quer zum Montageelement 32 von dem Fahrzeugheck 14 weg erstreckt.

Des Weiteren weist jede der Kastenstrukturen 24 und 26 eine außenliegende Strebenstruktur 46 auf, welche sich näherungsweise parallel zur innenliegenden Strebenstruktur 44, jedoch im Abstand von dieser ebenfalls von dem Montageelement 32 ausgehend vom Fahrzeugheck 14 weg erstreckt.

Beide Strebenstrukturen 44 und 46 sind dabei fest mit dem Montageelement 32, beispielsweise durch Schweißverbindungen, verbunden.

Die beiden Strebenstrukturen 44 und 46 gehen an ihren dem Montageelement 32 abgewandten Endbereichen in ein Aufprallelement 48 über, welches im Abstand vom Fahrzeugheck 14 und im Abstand von dem Montageelement 32 verläuft und auf welches einen Aufprall eines heckseitig auf das Fahrzeug 10 im Crashfall auftreffenden Fahrzeugs erfolgt.

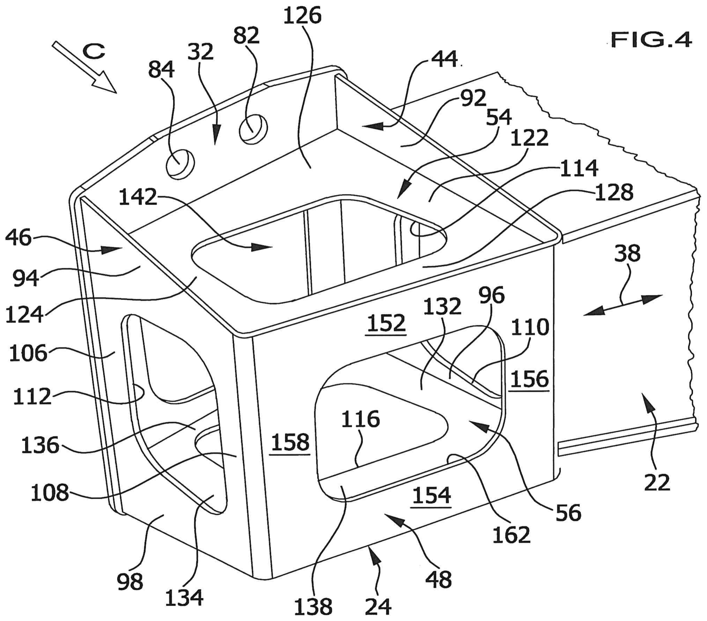

Bei dem in Fig. 3 und Fig. 4 dargestellten Ausführungsbeispiel sind die innenliegende Strebenstruktur 44 und die außenliegende Strebenstruktur 46 einstückig mit dem Aufprallelement 48 verbunden und bilden ein ungefähr U-förmiges Teil, wobei beispielsweise die Strebenstruktur 44 sich weiter von dem Montageelement 32 wegerstreckt als die Strebenstruktur 46, so dass das Aufprallelement 48 nicht parallel zum Montageelement 32, sondern in einer Fläche, welche in einem Winkel relativ zu diesem verläuft.

Zur Stabilisierung der Strebenstrukturen 44 und 46 bei einem auf das Aufprallelement 48 wirkenden Crash umfasst jede der Kastenstrukturen 24 und 26 noch zwei versteifende Strebenstrukturen 54 und 56, die sich quer zu den Strebenstrukturen 44 und 46 sowie zum Aufprallelement 48 und zum Montageelement 32 erstrecken, vorzugsweise näherungsweise parallel zur Fahrzeugquerrichtung 38.

Dagegen verlaufen die Strebenstrukturen 44 und 46, vorzugsweise quer zur Fahrzeugquerrichtung 38 und ungefähr parallel zur Fahrzeuglängsmittelebene 18, insbesondere in einem Winkel von ±20° oder weniger zu dieser.

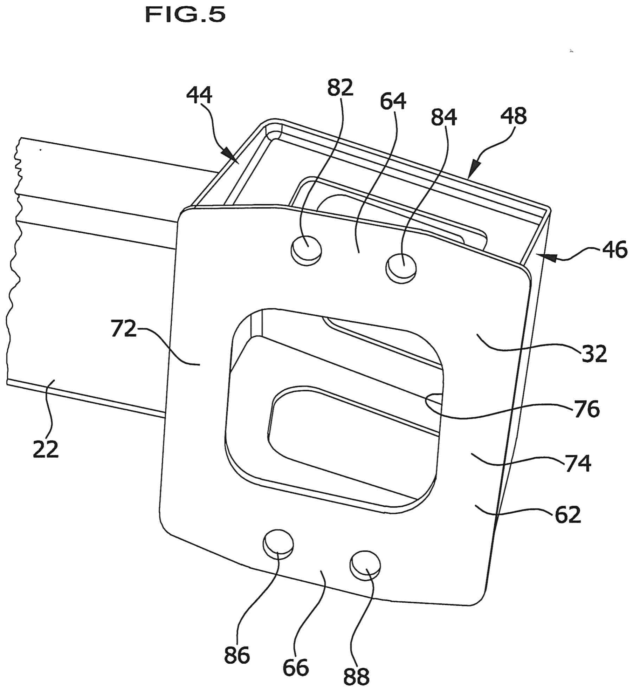

Wie in Fig. 5 dargestellt, ist das Montageelement 32 mit einer Stützfläche 62 versehen, deren Form an die Form der Montagefläche 34 des Fahrzeughecks 14 angepasst sind.

Die Stützfläche 62 wird dabei gebildet durch ein in vertikaler Richtung betrachtet oberes Stützsegment 64, ein unteres Stützsegment 66 und seitliche Stützsegmente 72 und 74, die sich zwischen den Stützsegmenten 64 und 66 erstrecken, wobei alle Stützsegmente 64, 66, 72, 74 ineinander übergehen und einen insbesondere zentralen Durchbruch 76 des Montageelements 32 umschließend angeordnet sind.

Ferner weist das obere Stützsegment 64 zwei im Abstand voneinander angeordnete Montagepunkte 82 und 84 auf und das untere Stützsegment 66 weist zwei im Abstand voneinander angeordnete Montagepunkte 86 und 88 auf, im Bereich von welchen beispielsweise Schrauben angreifen, mit denen eine Herstellung der Verbindung zu dem Fahrzeugheck 14 erfolgt.

Zur optimalen Kraftübertragung von den Strebenstrukturen 44 und 46 auf das Montageelement 32 sind die Strebenstrukturen 44 und 46 so ausgebildet, dass die Montagepunkte 82 und 84 sowie 86 und 88 des Montageelements 32 zwischen diesen angeordnet sind und insbesondere nicht oberhalb oder unterhalb von Oberkanten bzw. Unterkanten der Strebenstrukturen 44 und 46 angeordnet sind.

Insbesondere umfasst jede der Strebenstrukturen 44 und 46 bezogen auf die vertikale Richtung jeweils ein oberes Strebensegment 92 bzw. 94 sowie ein unteres Strebensegment 96 bzw. 98, die derart mit dem Montageelement 32 verbunden sind, dass die oberen Montagepunkte 82 und 84 zwischen den oberen Strebensegmenten 92 und 94 liegen und die unteren Montagepunkte 86 und 88 zwischen den Strebensegmenten 96 und 98.

Ferner liegen die oberen Montagepunkte 82 und 84, wie in Fig. 4 dargestellt, bezogen auf die vertikale Richtung, oberhalb der oberen versteifenden Strebenstruktur 54 und die unteren Montagepunkte 86 und 88 unterhalb der unteren versteifenden Strebenstruktur 56.

Zusätzlich erfahren die Strebenstrukturen 44 und 46 noch eine weitere Versteifung durch ungefähr die oberen Strebensegmente 92 und 94 und die unteren Strebensegmente 96 und 98 verbindenden Strebensegmente 102 und 104 bzw. 106 und 108, wobei die Strebensegmente 102 und 106 an das Montageelement 32 angrenzen und insbesondere mit diesen verbunden sind, während die Strebensegmente 104 und 108 an das Aufprallelement 48 angrenzen.

Alle Strebensegmente 92, 96, 102, 104 sowie 94, 98, 106 und 108 gehen in der jeweiligen Strebenstruktur 44 oder 46 jeweils ineinander über und umschließen einen insbesondere zentralen Durchbruch 110, 112, der zur Gewichtsersparnis beiträgt.

Auch jede der versteifenden Strebenstrukturen 54 und 56 umfasst einen insbesondere zentralen Durchbruch 114 bzw. 116 und um diesen umlaufend angeordnete Strebensegmente, wobei Strebensegmente 122 und 124 der versteifenden Strebenstruktur 54 an die Strebenstrukturen 44 und 46 anschließen und mit diesen starr verbunden sind, während Strebensegmente 126 und 128 der versteifenden Strebenstruktur 54 an das Montageelement 32 bzw. das Aufprallelement 48 anschließen und mit diesen fest verbunden sind (Fig. 4).

Desgleichen umfasst die versteifende Strebenstruktur 56 Strebensegmente 132 und 134, welche an die Strebenstrukturen 44 und 46 anschließen und mit diesen fest, beispielsweise durch Schweißen, verbunden sind, sowie Strebensegmente 136 und 138, welche an das Montageelement 32 bzw. das Aufprallelement 48 anschließen und mit diesen fest verbunden sind.

Insgesamt umschließt die jeweilige Kastenstruktur 24, 26 mit den Strebenstrukturen 44 und 46 bzw. 54 und 56 jeweils einen zentralen Hohlraum 142, der ebenfalls zwischen dem Montageelement 32 und dem Aufprallelement 48 liegt, und die Möglichkeit eröffnet, dass bei einem Crash die jeweilige Kastenstruktur 24, 26 deformiert werden kann, wobei die jeweiligen Strebensegmente 92 bis 98, 102 bis 108 sowie 122 bis 128 und 132 bis 138 die Möglichkeit eröffnen, die jeweilige lokale Steifigkeit durch deren Flächenausdehnung den Crashanforderungen anzupassen.

Insbesondere sind bei den Kastenstrukturen 24 und 26 die Verformungssteifigkeiten für die plastische Verformung im Bereich der versteifenden Strebenstrukturen 54 und 56 geringer als im Bereich der innenliegenden und außenliegenden Strebenstrukturen 44 und 46, um eine vertikale Stabilität der Kastenstrukturen 24, 26 zu erhalten, die einen Aufprall in unterschiedlichen vertikalen Höhen über der Fahrbahnoberfläche 42 aufnehmen können und unter Verformung der versteifenden Strebenstrukturen 54 und 56 Deformationen in Richtung des Montageelements 32 zuzulassen.

Die Verformungssteifigkeit für die im Crash-Fall relevante plastische Verformung resultiert aus der Geometrie des Teils und den für die Fließ- oder Streckgrenze des Materials dieses Teils relevanten Parametern.

Darüber hinaus ist aufgrund der Tatsache, dass die innenliegenden Strebenstrukturen 44 den Mittelträger 22 halten, im Bereich derselben ebenfalls eine ausreichend große Verformungssteifigkeit für die plastische Verformung von Vorteil.

Darüber hinaus ist das jeweilige Montageelement 32 so ausgebildet, dass es die höchste Verformungssteifigkeit für die plastische Verformung aufweist, um die bei einem Crash auftretenden Kräfte möglichst flächig auf die Montagefläche 34 des Fahrzeughecks 14 zu übertragen.

Ferner ist bei dem ersten Ausführungsbeispiel das jeweilige Aufprallelement 48 aus einem Material mit derselben Verformungssteifigkeit für die plastische Verformung ausgebildet, wie die innenliegende Strebenstruktur 44 und die außenliegende Strebenstruktur 46, da das Aufprallelement 48 einstückig an die innenliegende und außenliegenden Strebenstruktur 44, 46 angeformt ist.

Darüber hinaus ist aber auch das Aufprallelement 48 mit Aufprallsegmenten 152 und 154 bzw. 156 und 158 versehen, welche einen Durchbruch 162 umschließen und ineinander übergehen.

Somit ist auch aufgrund der Ausbildung der Aufprallsegmente 152, 154, 156, 158 und der Größe des Durchbruchs 162 die Steifigkeit der einzelnen Aufprallsegmente 152 bis 158 festlegbar.

Vorzugsweise ist das Aufprallelement 48 so ausgebildet, dass dies eine vertikale Ausdehnung aufweist, welche mehr als 100 mm, noch besser mehr als 120 mm und vorzugsweise mehr als 150 mm aufweist, um Heckcrashs optimal absorbieren zu können, die entsprechend den unterschiedlichen Fahrzeugtypen in unterschiedlichen Höhen erfolgen.

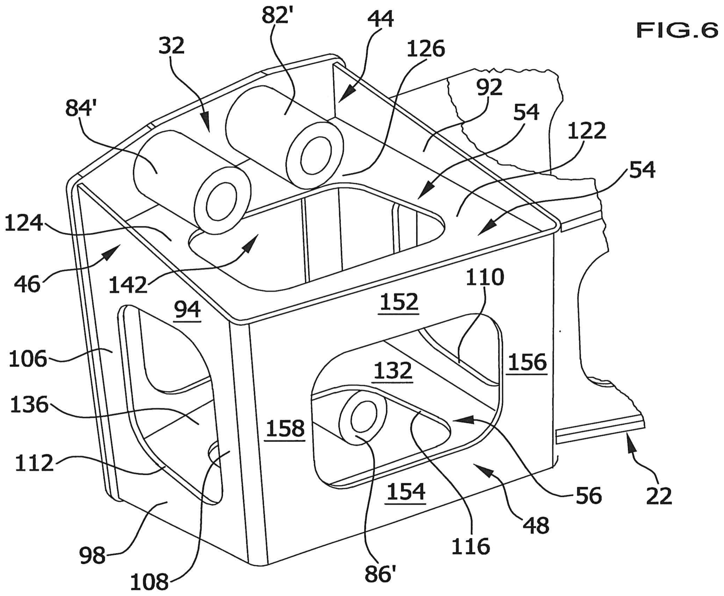

Bei einem zweiten Ausführungsbeispiel einer erfindungsgemäßen Heckaufpralleinheit 20, dargestellt in Fig. 6, sind diejenigen Elemente, die mit denen des ersten Ausführungsbeispiels identisch sind, mit denselben Bezugszeichen versehen, so dass hinsichtlich deren Beschreibung vollinhaltlich auf die Ausführungen zum ersten Ausführungsbeispiel Bezug genommen wird.

Im Gegensatz zum ersten Ausführungsbeispiel sind die Montagepunkte 82', 84', 86', 88' in dem Montageelement 32 nicht als Durchbrüche ausgebildet, sondern mit sich von dem Montageelement 32 weg in Richtung der Strebenstruktur 48 erstreckenden Zylinderkörpern versehen, welche es erlauben, beispielsweise längere Verbindungselemente, beispielsweise Schrauben, einzusetzen, die eine größere Elastizität aufweisen als kurze Schrauben, und somit im Crashfall zu einer geringeren Bruchneigung führen.

Im Übrigen wird hinsichtlich der übrigen Merkmale sowohl des Montageelements 32 als auch der Strebenstrukturen 44 und 46 sowie der Strebenstrukturen 54 und 56 vollinhaltlich auf die Ausführungen zum ersten Ausführungsbeispiel verwiesen.

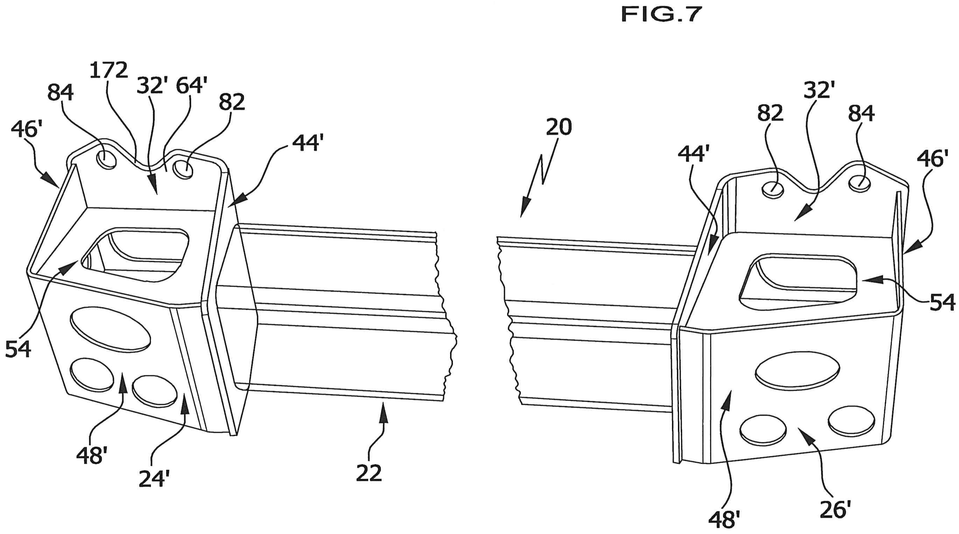

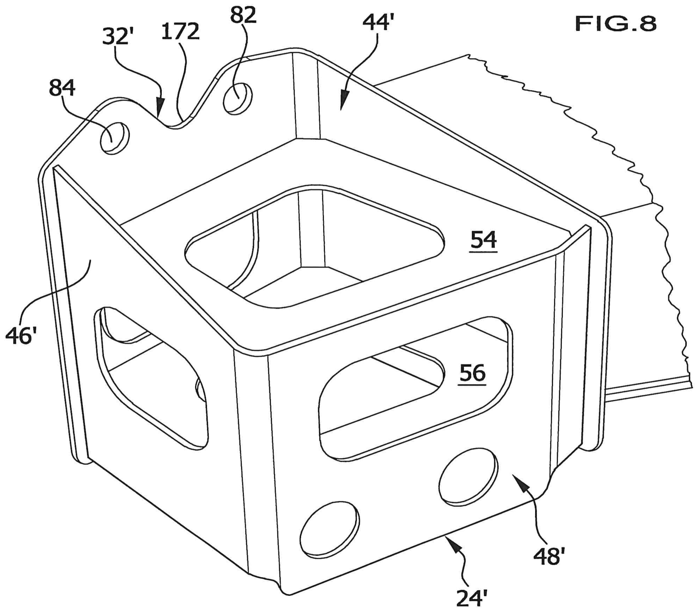

Bei einem dritten Ausführungsbeispiel einer erfindungsgemäßen Heckaufpralleinheit 20, dargestellt in den Fig. 7 und 8, ist das Montageelement 32' der Kastenstrukturen 24', 26' in Relation zum ersten Ausführungsbeispiel dahingehend modifiziert, dass das Montageelement 32' zwischen den Montagepunkten 82 und 84 eine Einziehung aufweist, um ein optimales Anliegen des Montageelements 32' an der Montagefläche 34 sicherzustellen.

Darüber hinaus ist bei diesem Ausführungsbeispiel die innenliegende Strebenstruktur 44' einstückig an das Montageelement 32 angeformt und weist somit dieselbe aus Materialdicke und Materialsteifigkeit resultierende Verformungssteifigkeit für plastische Verformung auf, wie das Montageelement 32' auf, was insbesondere dann von Vorteil ist, wenn der Mittelträger 22 für große Belastungen geeignet sein soll.

Bei diesem Ausführungsbeispiel ist im Übrigen auch dann die außenliegende Strebenstruktur 46' aus einem Material mit geringerer Verformungssteifigkeit für die plastische Verformung als das Material für die innenliegende Strebenstruktur 44', und die außenliegende Strebenstruktur 46' ist ferner einstückig mit dem Aufprallelement 48' ausgebildet, das somit ebenfalls aus demselben Material ist wie die außenliegende Strebenstruktur 46' und mit dieser ein L-förmiges Element bildet.

Die Verwendung der beiden L-förmigen Elemente, nämlich des Montageelements 32' und der innenliegenden Strebenstruktur 44' einerseits und der außenliegenden Strebenstruktur 46' mit dem Aufprallelement 48' andererseits, ermöglicht es somit einerseits die Fertigung zu vereinfachen und andererseits eine größere Freiheit hinsichtlich der Auslegung der Deformationsmöglichkeiten der Kastenstrukturen 24' und 26' zu erhalten.

Im Übrigen wird hinsichtlich der weiteren Merkmale vollinhaltlich auf das erste Ausführungsbeispiel Bezug genommen.

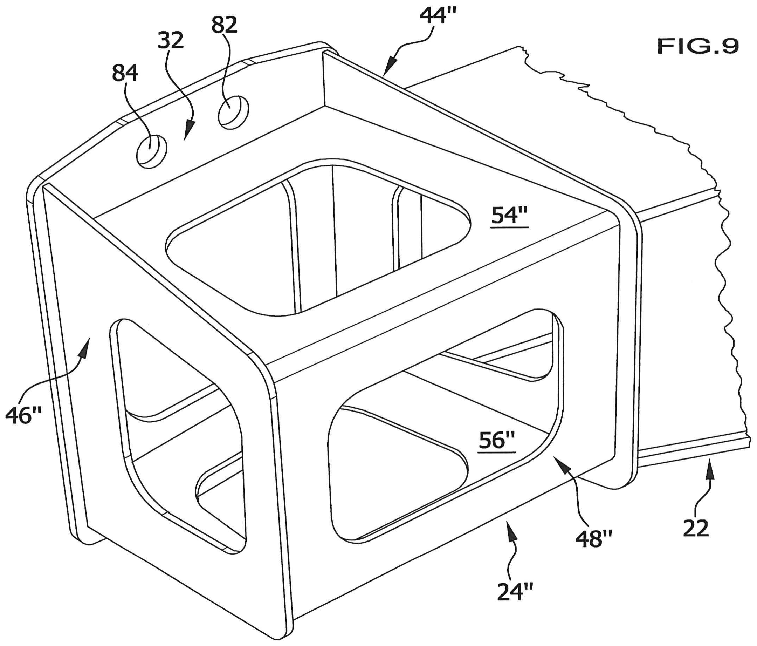

Bei einem vierten Ausführungsbeispiel, dargestellt in Fig. 9, ist das Montageelement 32 in gleicher Weise gestaltet wie beim ersten Ausführungsbeispiel, außerdem sind auch die innenliegende Strebenstruktur 44" und die außenliegende Strebenstruktur 46" in gleicher Weise wie beim ersten Ausführungsbeispiel, allerdings als separat am Montageelement 32 gehaltene Strebenstrukturen, ausgebildet.

Allerdings ist das Aufprallelement 48" zusammen mit den versteifenden Strebenstrukturen 54" und 56" als U-förmiges Teil ausgebildet, welches sich zwischen den der innenliegenden Strebenstruktur 44" und der außenliegenden Strebenstruktur 46" erstreckt und mit diesen fest verbunden ist.

Dabei ist bei diesem Ausführungsbeispiel das Aufprallelement 48" aus demselben Material wie die versteifenden Strebenstrukturen 54" und 56" ausgebildet und somit aus einem dünneren und weniger struktursteifen und somit weniger verformungssteifen Material als die innenliegende Strebenstruktur 44" und die außenliegende Strebenstruktur 46".

Im Übrigen sind die Strebenstrukturen 44, 46, 54, 56 in gleicher Weise wie beim ersten Ausführungsbeispiel aus Strebensegmenten 92 bis 98, 102 bis 106, 122 bis 128 und 132 bis 138 gebildet, so dass diesbezüglich vollinhaltlich auf das erste Ausführungsbeispiel Bezug genommen werden kann.

Auch hinsichtlich der Ausbildung des Montageelements 32 kann auf das erste Ausführungsbeispiel Bezug genommen werden, wobei in diesem Fall das Montageelement 32 aus einem Material mit der größten Verformungssteifigkeit für die plastische Verformung und der größten Dicke gebildet ist, während die innenliegende Strebenstruktur 44 und die außenliegende Strebenstruktur 46 aus Material mit geringerer Verformungssteifigkeit für die plastische Verformung und Dicke als das Montageelement 32 gebildet sind.

Ferner weisen das Aufprallelement 48" und die Strebenstrukturen 54" und 56" Materialien derselben Verformungssteifigkeit für die plastische Verformung und derselben Dicke auf, die geringer als die der Strebenstrukturen 44 und 46 sind.

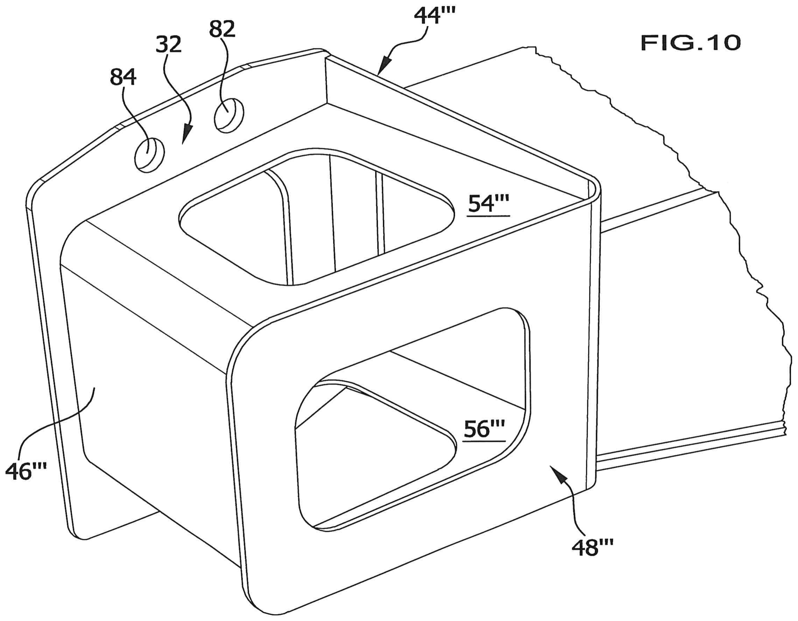

Bei einem fünften Ausführungsbeispiel, dargestellt in Fig. 10, sind die innenliegende Strebenstruktur 44‴ und das Aufprallelement 48"' als einstückig aus demselben Material mit derselben Verformungssteifigkeit für die plastische Verformung gebildet während die außenliegende Strebenstruktur 46‴ sowie die versteifenden Strebenstrukturen 54‴ und 56‴ ihrerseits aus demselben Material gebildet sind, das eine geringere Verformungssteifigkeit für die plastische Verformung aufweist als die innenliegenden Strebenstruktur 44.

Bei dieser Lösung ist insbesondere das Montageelement 32 das Element, welches die größte Verformungssteifigkeit für die plastische Verformung aufweist.

Im Übrigen wird hinsichtlich der innenliegenden Strebenstruktur 44‴ sowie des Aufprallelements 48‴ und des Montageelements 32 vollinhaltlich auf das erste Ausführungsbeispiel Bezug genommen.

Im Gegensatz dazu ist allerdings die außenliegende Strebenstruktur 46‴ vollflächig ausgebildet, um die geringere Verformungssteifigkeit für die plastische Verformung des Materials durch die vollflächige Form auszugleichen.

Im Übrigen sind die versteifenden Strebenstrukturen 54‴ und 56‴ in gleicher Weise wie beim ersten Ausführungsbeispiel ausgebildet, allerdings einstückig zusammen mit der außenliegenden Strebenstruktur 46‴ zu einem U-förmigen Teil geformt.

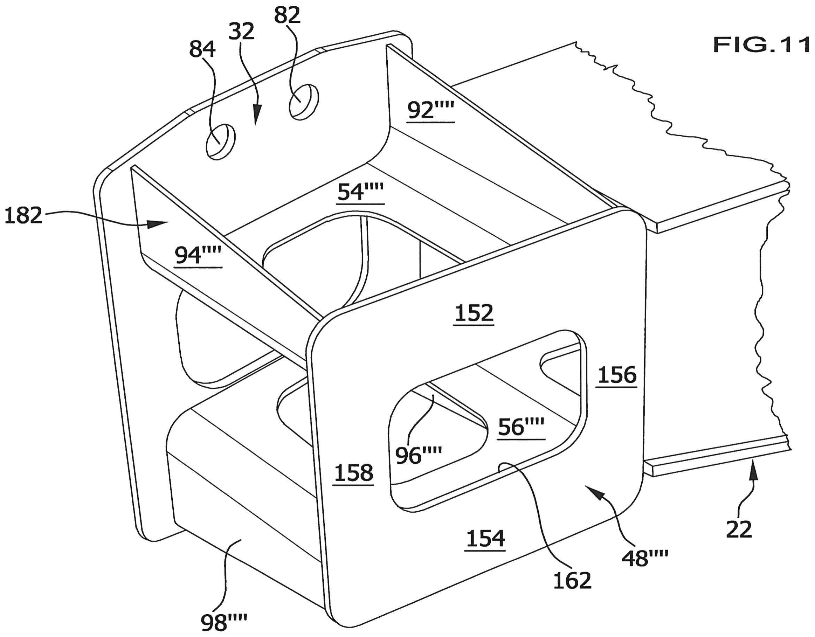

Bei einem sechsten Ausführungsbeispiel, dargestellt in Fig. 11 ist das Montageelement 32 in gleicher Weise ausgebildet wie beim ersten Ausführungsbeispiel, so dass vollinhaltlich auf die Ausführungen zum ersten Ausführungsbeispiel Bezug genommen werden kann.

Desgleichen ist das Aufprallelement 48"" hinsichtlich dessen Form und dessen Aufprallsegmenten 152 bis 158 sowie des Durchbruchs 162 in gleicher Weise ausgebildet wie beim ersten Ausführungsbeispiel, allerdings stellt das Aufprallelement 48"" ein separates Teil dar.

Die Verbindung zwischen dem Aufprallelement 48"" und dem Montageelement 32 erfolgt über ein oberes U-förmig ausgebildetes Element 182, welches die Strebenstruktur 54ʺʺ sowie beiderseits an diese angeformte obere Strebensegmente 92"" und 94ʺʺ umfasst, die zusammen mit der versteifenden Strebenstruktur 54ʺʺ eine Einheit bilden und aus demselben Material mit derselben Verformungssteifigkeit für die plastische Verformung gebildet sind.

Des Weiteren bildet die versteifende Strebenstruktur 56ʺʺ zusammen mit den unteren Strebensegmenten 96ʺʺ und 98"" ebenfalls ein U-förmiges Teil, so dass auch die unteren Strebensegmente 96ʺʺ und 98"" zusammen mit der unteren versteifenden Strebenstruktur 56ʺʺ mit derselben Verformungssteifigkeit für die plastische Verformung hergestellt sind.

Allerdings fehlen bei diesem sechsten Ausführungsbeispiel die im Zusammenhang mit dem ersten Ausführungsbeispiel beschriebenen Strebensegmente 102 und 104 sowie 106 und 108 die die Strebensegmente 94 und 98 beim ersten Ausführungsbeispiel miteinander verbinden.

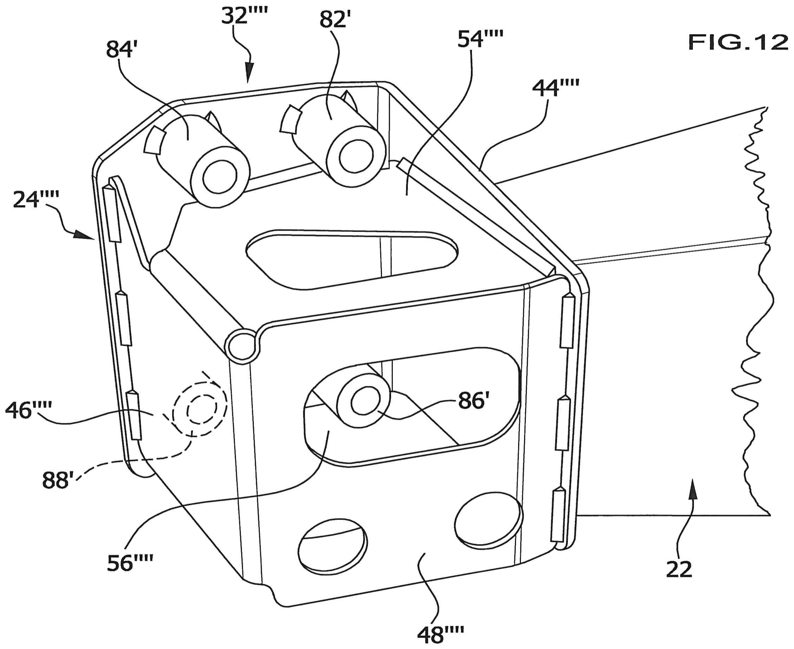

Bei einem siebten Ausführungsbeispiel, dargestellt in Fig. 12, ist das Montageelement 32 in gleicher Weise ausgebildet wie beim zweiten Ausführungsbeispiel, wobei die Montagepunkte 84', 82,'86' und 88' mit Zylinderkörpern versehen sind, welche es erlauben, beispielsweise längere Verbindungselemente, beispielsweise Schrauben, einzusetzen, die somit eine größere Elastizität aufweisen.

Des Weiteren ist bei dem siebten Ausführungsbeispiel gemäß Fig. 12 vorgesehen, dass in gleicher Weise wie beim dritten Ausführungsbeispiel gemäß den Fig. 7 und 8 bei den Kastenstrukturen 24" (und 26") die außenliegende Strebenstruktur 46ʺʺ einstückig mit dem Aufprallelement 48"" und zusätzlich aber auch mit den Strebenstrukturen 54ʺʺ sowie 56ʺʺ ausgebildet ist, die dann mit der innenliegenden Strebenstruktur 44ʺʺ einerseits und dem Montageelement 32"" andererseits, die einstückig miteinander verbunden sind, verschweißt sind, so dass die jeweilige Kastenstruktur 24ʺʺ und die in gleicher Weise ausgebildete Kastenstruktur 26ʺʺ lediglich aus zwei einstückigen Teilen durch Umformen und Verschweißen gebildet werden können.

Vorzugsweise weisen in diesem Fall die Strebenstrukturen 46"", 48"", 54ʺʺ und 56ʺʺ durch ihre einstückige Ausbildung aus demselben Material dieselben Verformungssteifigkeiten für die plastische Verformung auf, wobei die Verformungssteifigkeit für die plastische Verformung in diesem Fall geringer ist als die Verformungssteifigkeit für die plastische Verformung der innenliegenden Strebenstruktur 44ʺʺ und des Montageelements 32ʺʺ, die beide ebenfalls aus demselben Material mit derselben Verformungssteifigkeit hergestellt sind.

Hinsichtlich weiterer Details wird vollinhaltlich auf die Ausführungen zu den voranstehenden Ausführungsbeispielen Bezug genommen.

Die Gemeinsamkeit aller voranstehend beschriebenen sieben Ausführungsbeispiele der erfindungsgemäßen Heckaufpralleinheiten 20 besteht darin, dass diese eine Heckaufpralleinheit 20 darstellen, welche wie beschrieben, verdeckt von der Stoßfängereinheit 16 am Fahrzeugheck 14 montiert werden kann und das Fahrzeugheck 14 zumindest bei einem niedrigenergetischen Heckaufprall gegen eine Beschädigung schützen kann, wobei die Aufprallenergie bei einem derartigen Heckaufprall entweder direkt auf die Kastenstrukturen 24 und 26 einwirkt oder auf den Mittelträger 22 einwirkt, der diese Energie jedoch auf die Kastenstrukturen 24, 26 überträgt und bei diesen zur Deformation führt.

Eine derartige Heckaufpralleinheit 20 dient insbesondere auch zum Schutz gegen einen seitlichen Heckaufprall, der möglichst unmittelbar auf eine der Kastenstrukturen 24 oder 26 einwirkt.

Eine derartige Heckaufpralleinheit 20 ist aber auch flexibel insoweit gestaltbar als an dem Mittelträger 22, gegebenenfalls durch zusätzliche Montage oder Auswechslung desselben, eine Vorrichtung zum Anhängen eines Anhängers und/oder zum Montieren eines Lastenträgers vorgesehen werden kann.

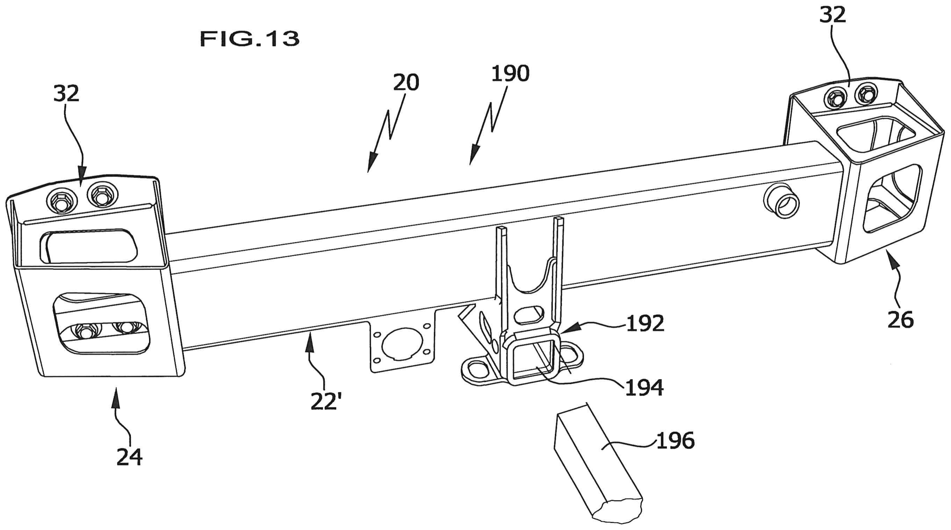

Dies ist basierend auf dem ersten Ausführungsbeispiel oder einem der weiteren Ausführungsbeispiele der erfindungsgemäßen Heckaufpralleinheit 20 bei einer Variante 190 dieser Heckaufpralleinheit 20 in Fig. 13 dargestellt. Bei dieser ist der Mittelträger 22' dahingehend modifiziert, dass dieser einen Aufnahmekörper 192 mit einer Aufnahme 194 für einen Einsteckabschnitt 196 eines Kupplungselements für einen Anhänger oder einen Lastenträger aufweist, die entweder fest mit dem Mittelträger 22' verbunden ist oder relativ zu dem Mittelträger 22' bewegbar ist.

Derartige Aufnahmekörper 192 und Aufnahmen 194 für Einsteckabschnitte 196 von Kupplungselementen oder Lastenträgern sind beispielsweise in den Patentanmeldungen
DE 10 2016 107 302
DE 10 2017 109 488
DE 10 2020 114 230
DE 10 2020 114 231
DE 10 2024 106 825
DE 10 2023 103 438
DE 10 2024 111 707
DE 10 2024 131 695
DE 10 2024 123 334
DE 10 2024 123 333

### vollumfänglich beschrieben.

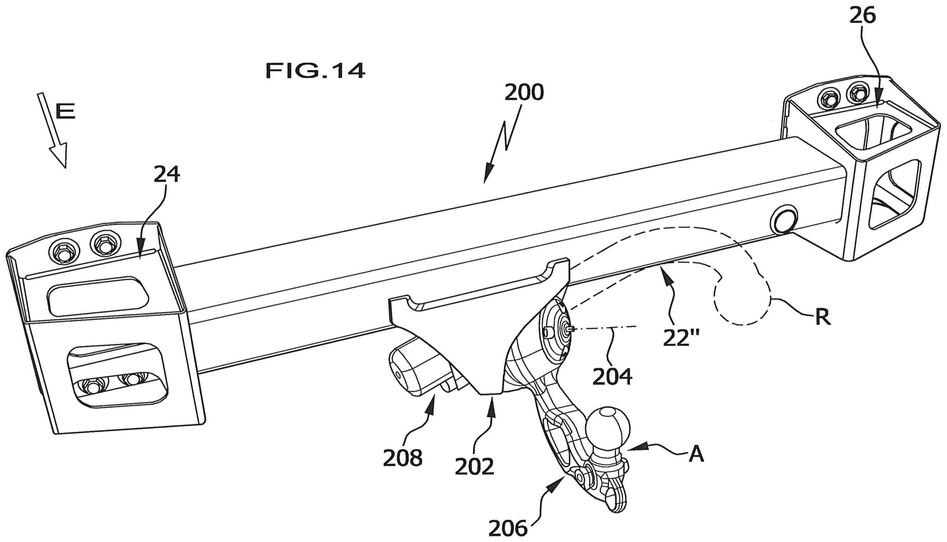

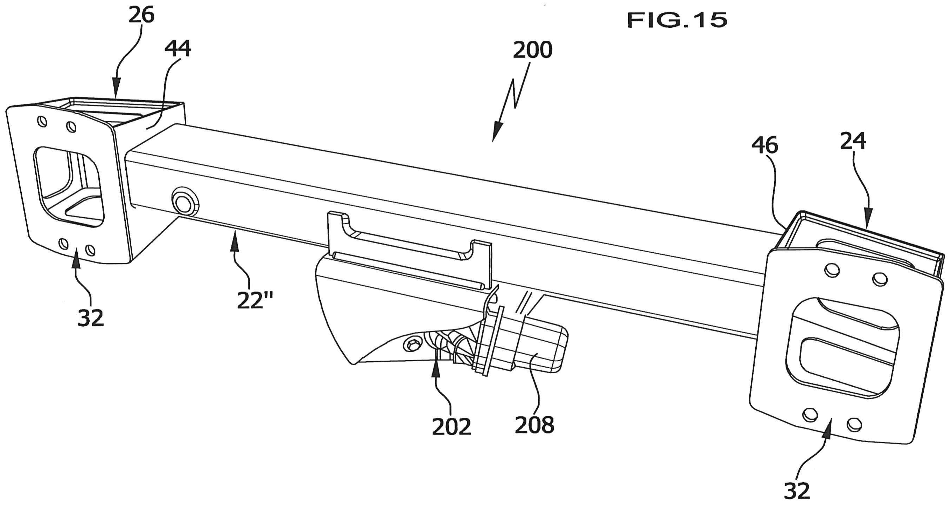

Bei einer zweiten Variante 200 der Heckaufpralleinheit 20, beispielsweise basierend auf dem ersten Ausführungsbeispiel der erfindungsgemäßen Heckaufpralleinheit 20 ist der Mittelträger 22" dahingehend modifiziert, dass an diesem eine Schwenkeinheit 202 angeordnet ist, mit welcher ein Kugelhals 206 um eine Schwenkachse 204 der Schwenkeinheit schwenkbar gelagert ist, so dass dieser Kugelhals 206 von einer Arbeitsstellung A um die Schwenkachse 204 in eine in Fig. 14 gestrichelt dargestellte Ruhestellung R verschwenkbar ist, in welcher sich der Kugelhals im Wesentlichen längs des Mittelträgers 22" der Variante der Heckaufpralleinheit 200 erstreckt (Fig. 14, 15).

Dabei weist die Schwenkeinheit 202 noch vorzugsweise eine Antriebseinheit 208 auf, mit welcher mindestens eine Verriegelung der Schwenkbewegung des Kugelhalses 206 um die Schwenkachse 205 betätigbar ist oder vorzugsweise ergänzend dazu auch die Schwenkbewegung antreibbar ist.

Ferner ist bei dieser Variante 200 der Heckaufpralleinheit der Mittelträger 22" in gleicher Weise durch die Kastenstrukturen 24, 26 am Fahrzeugheck 14 montierbar, wobei die Kastenstrukturen 24 und 26 beispielsweise gemäß dem ersten oder weiteren Ausführungsbeispielen der Heckaufpralleinheit 20 ausgebildet sind, so dass diesbezüglich auf die Ausführungen zu den Kastenstrukturen der voranstehenden Ausführungsbeispielen Bezug genommen werden kann.

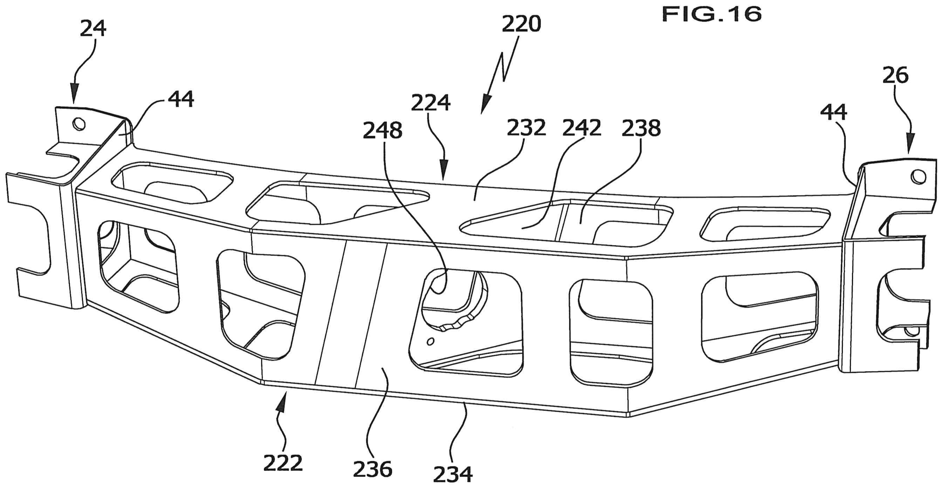

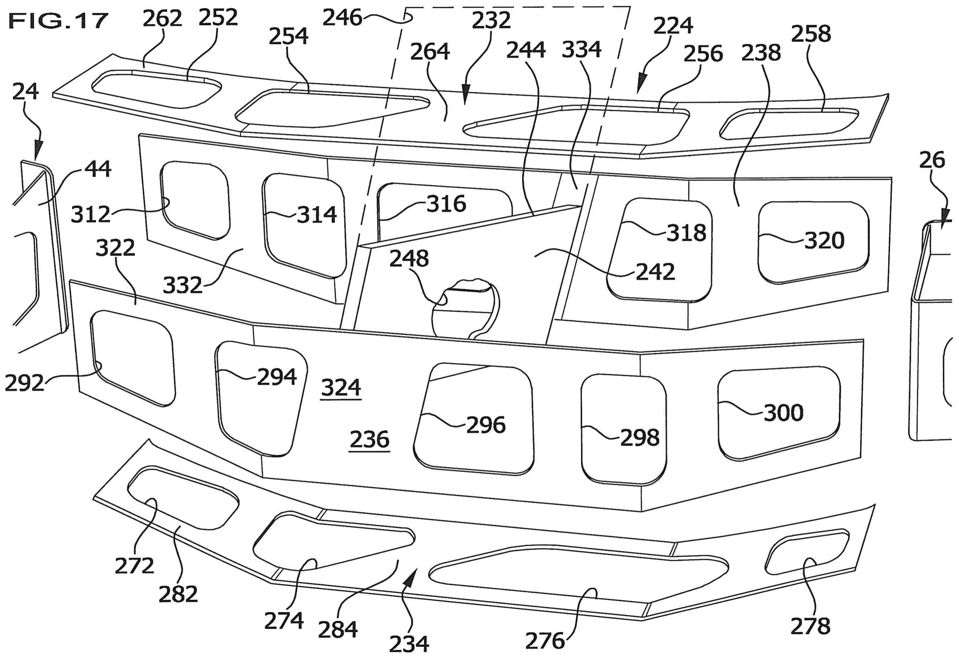

Bei einer dritten Variante 220 der erfindungsgemäßen Heckaufpralleinheit 20, dargestellt in Fig. 16 und 17 unterscheidet sich der Mittelträger 222 von dem Mittelträger 22 gemäß dem ersten Ausführungsbeispiel dadurch, dass dieser nicht als Rohrkörper sondern als Kastenkörper 224 ausgebildet ist, welcher sich zwischen den Kastenstrukturen 24 und 26 streckt.

Dabei umfasst der Kastenkörper 224 ein fahrbahnabgewandtes Wandelement 232 sowie ein fahrbahnzugewandtes Wandelement 234, die sich zwischen den Strebenstrukturen 44 der Kastenstrukturen 24 und 26 erstrecken und fest mit diesen verbunden sind.

Dabei verlaufen die Wandelemente 232 und 234 in vertikaler Richtung, bezogen auf die Fahrbahn, im Abstand voneinander.

Zwischen diesen Wandelementen 232 und 234 ist ein fahrzeugabgewandtes Wandelement 236 angeordnet und mit den Wandelementen 232 und 234 verbunden, beispielsweise durch Schweißnähte.

Dabei weisen die Wandelemente 232 und 234 die größte Verformungssteifigkeit für die plastische Verformung auf, während das Wandelement 236 eine geringere Verformungssteifigkeit für die plastische Verformung aufweist.

Vorzugsweise erstreckt sich aber das Wandelement 236 ebenfalls zwischen den Strebenstrukturen 44 der Kastenstrukturen 24 und 26 und ist mit diesen fest verbunden.

Eine zusätzliche Versteifung des Kastenkörpers 224 erfolgt insbesondere durch ein fahrzeugzugewandtes Wandelement 238, welches sich ebenfalls zwischen dem fahrbahnabgewandten Wandelement 232 und dem fahrbahnzugewandten Wandelement 234 erstreckt und fest mit diesen verbunden ist, jedoch im Abstand von dem fahrzeugabgewandten Wandelement 236 dem Fahrzeugheck 14 zugewandt angeordnet ist und den Kastenkörper 224 auf der dem Fahrzeugheck 14 zugewandten Seite abschließt.

Auch das fahrzeugzugewandte Wandelement 238 ist in gleicher Weise ausgebildet wie das fahrzeugabgewandte Wandelement 236 und aus einem Material mit derselben Verformungssteifigkeit für die plastische Verformung wie das fahrzeugabgewandte Wandelement 236 ausgebildet.

Zur optimalen Ausnutzung des Kastenkörpers ist in einem mittigen Bereich des Kastenkörpers 224 ein Montageflansch 242 angeordnet, welcher sowohl mit den Wandelementen 232 und 234 sowie den Wandelementen 236 und 238 im Bereich seiner den Wandelementen 232, 234, 236 und 238 zugewandten Außenseiten 244 verbunden, vorzugsweise fest mit diesen verschweißt ist.

Dabei erstreckt sich der Montageflansch 242 vorzugsweise in einer Flanschebene 246, die zu der Fahrzeuglängsmittelebene 18 in einem Winkel geneigt ist.

Der Montageflansch 242 dient ohne Einsatz einer Anhängekupplung zur Versteifung des Kastenkörpers 224 in seinem mittigen Bereich durch seine Verbindung zu den Wandelementen 232, 234, 236 und 238.

Der Montageflansch 242 weist aber vorzugsweise eine Montageöffnung 248 auf, welche den Anbau einer Schwenkeinheit 202 an den Montageflansch 242 ermöglicht.

Ferner ist das fahrbahnabgewandte Wandelement 232 als Strebenstruktur ausgebildet, die mehrere Öffnungen, beispielsweise die Öffnungen 252 bis 258 des fahrbahnabgewandten Wandelements 232 aufweist, sowie diese Öffnungen 252 bis 258 umschließende Strebensegmente 262, 264 aufweist, die hinsichtlich ihrer Form und ihres Verlaufs die Steifigkeit des fahrbahnabgewandten Wandelements 232 mit bedingen.

Durch die Ausbildung der Strebensegmente 262 und 264 und die Größe der Öffnungen 252 bis 258 in Relation zueinander lässt sich somit die Steifigkeit des fahrbahnabgewandten Wandelements 232 optimieren.

In gleicher Weise weist das fahrbahnzugewandte Wandelement 234 Öffnungen 272, 274, 276 und 278 auf, die ebenfalls von Strebensegmenten 282, 284 umschlossen sind.

Insbesondere verlaufen jedoch den Montageflansch 242 haltende Strebensegmente 264 und 284 der Wandelemente 232, 234 so ausgerichtet, dass diese vollflächig an den diesen zugewandten Außenseiten 244 des Flanschelements 242 anliegen und fest mit diesen verbunden sind.

Desgleichen weisen das fahrzeugabgewandte Wandelement 236 und das fahrzeugzugewandte Wandelement 238 Öffnungen 292 bis 300 bzw. Öffnungen 312 bis 320 auf, welche von Strebensegmenten 322, 324 und 332, 334 umschlossen sind, wobei an dem Montageflansch 242 anliegende Strebensegmente 324 und 334 vollflächig an den diesen zugewandten Außenseiten 244 des Montageflansches 242 anliegen und fest mit diesen verbunden sind.

Damit dient der Montageflansch 242 auch gleichzeitig zur Aussteifung des gesamten Kastenkörpers 224 durch Verbinden der Wandelemente 232 und 234 sowie 236 und 238.

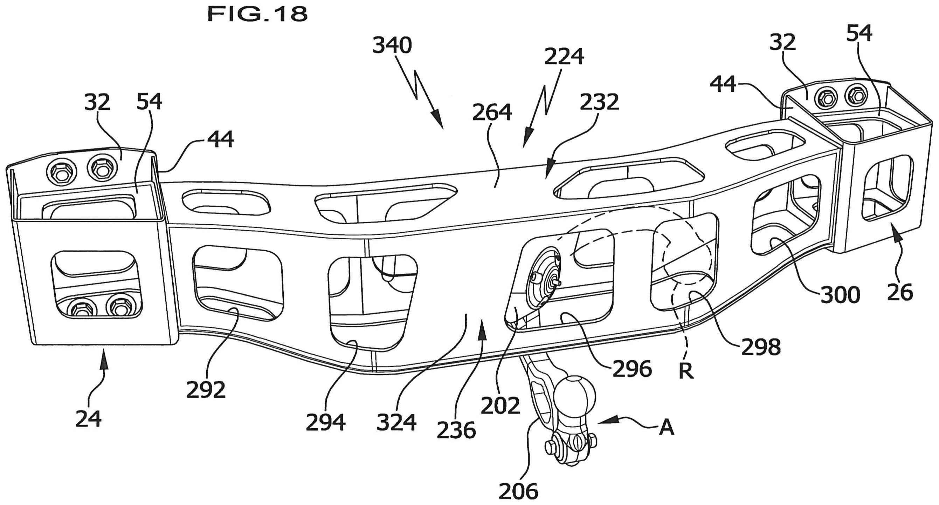

Insbesondere dann, wenn die Möglichkeit eröffnet werden soll, dass an dem Montageflansch 242 eine Schwenkeinheit 202 für einen schwenkbaren Kugelhals 206 angeordnet werden soll, ist die Öffnung 276 des fahrbahnzugewandten Wandelements 234 vorzugsweise so dimensioniert, dass der Kugelhals 206 von der Arbeitsstellung A durch diese hindurch in die Ruhestellung R innerhalb des Kastenkörpers 224 bewegt werden kann oder von der Ruhestellung R innerhalb des Kastenkörpers in die Arbeitsstellung A, wie dies in Fig. 18 dargestellt ist.

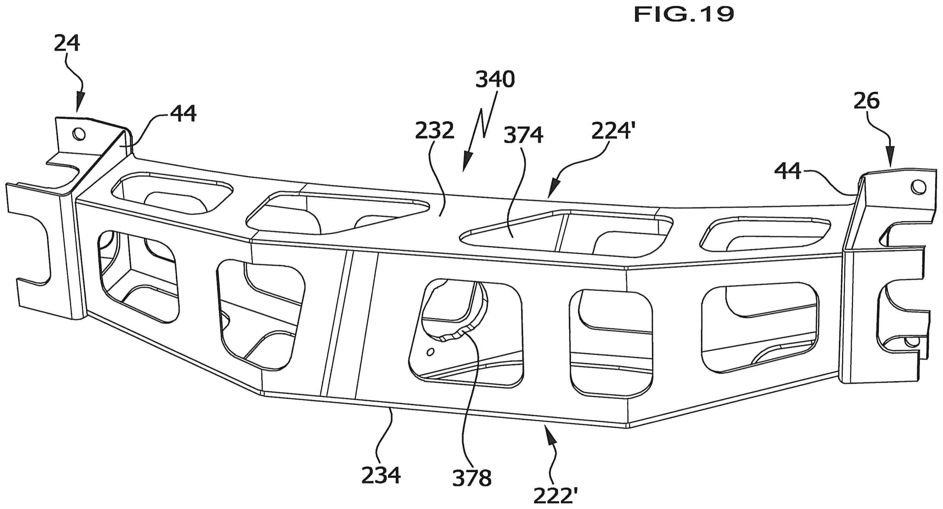

Bei einer fünften Variante 340, dargestellt in Fig. 19, der erfindungsgemäßen Heckaufpralleinheit 20 ist der Kastenkörper 224' ebenfalls so gebildet, dass er die Wandelemente 232 und 234 umfasst, die identisch ausgebildet sind wie bei der Variante 220.

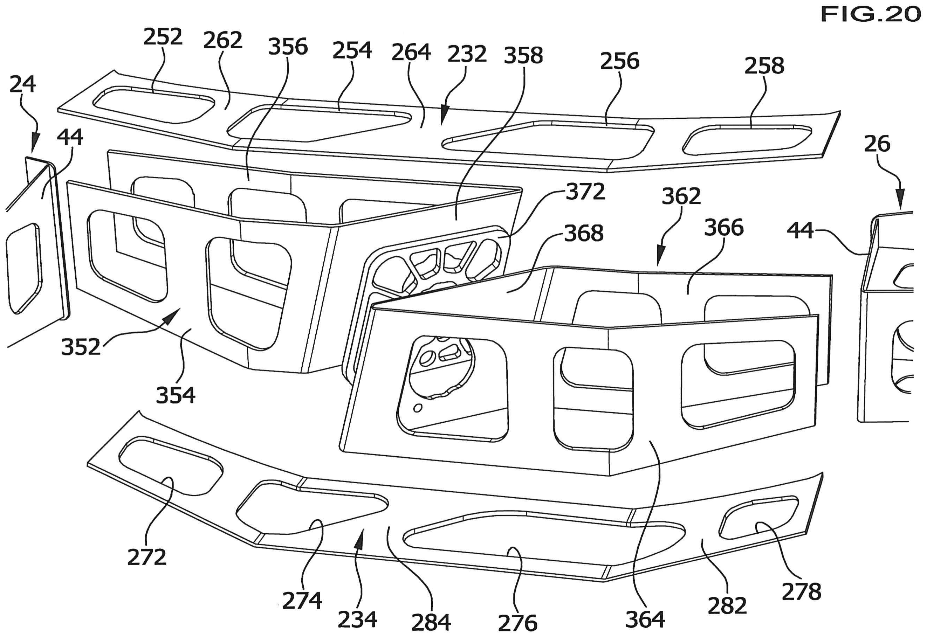

Allerdings umfasst der Mittelträger 222', wie insbesondere in Fig. 20 dargestellt, kein sich zwischen den Kastenstrukturen 24 und 26 erstreckendes fahrzeugabgewandtes Wandelement 236 und kein sich zwischen den Kastenstrukturen 24 und 26 erstreckendes fahrzeugzugewandtes Wandelement 238.

Vielmehr werden diese Wandelemente gebildet durch zwei U-förmig ausgebildeten Versteifungselemente 352 und 362.

Dabei umfasst das Versteifungselement 352 ein fahrzeugabgewandtes Wandelement 354 und ein fahrzeugzugewandtes Wandelement 356, welche auf ihren der Strebenstruktur 44 zugewandten Seiten der Kastenstruktur 24" fest mit der Strebenstruktur 44 verbunden sind und dieser gegenüberliegend einstückig mit einem Montageflanschelement 358 verbunden sind.

In gleicher Weise umfasst das Versteifungselement 362 ein fahrzeugabgewandtes Wandelement 364 sowie ein fahrzeugzugewandtes Wandelement 366, die beide auf ihren der Strebenstruktur 44 der Kastenstruktur 26 zugewandten Seiten fest mit dieser verbunden sind und der Strebenstruktur 44 gegenüberliegend mit einem Montageflanschelement 368 einstückig miteinander verbunden sind.

Dabei sind die Montageflanschelemente 358 und 368 einander gegenüberliegend angeordnet und sind beispielsweise unmittelbar miteinander verbindbar oder mit einer zwischen diesen liegenden Montageplatte 372 verbindbar, um so zusammen insgesamt einen Montageflansch 374 zu bilden, welcher eine Montageöffnung 378 aufweist, an welcher, wie in Fig. 19 dargestellt, die Schwenkeinheit 202 für einen schwenkbaren Kugelhals 206 montierbar ist, der zwischen einer Arbeitsstellung A, in welcher dieser unterhalb des Mittelträgers 222' entgegengesetzt zur Fahrtrichtung übersteht, in eine gestrichelt dargestellte Ruhestellung R, in welcher der Kugelhals 206 in dem Kastenkörper 224' liegt, verschwenkbar ist.

Auch bei dieser Variante weist das fahrbahnabgewandte Wandelement 232, in gleicher Weise wie bei der voranstehenden Variante beschrieben, die Öffnungen 252 bis 258 auf, die durch Strebensegmente 262, 264 umschlossen sind, bzw. das fahrbahnzugewandte Wandelement 234 weist die Öffnungen 272, 274, 276 und 278 auf, die durch Strebensegmente 282, 284 umschlossen sind.

Ferner sind die sich an den sich bildenden Montageflansch 374 anschließenden Strebensegmente 264 und 284 so ausgebildet, dass sie mit den Montageflanschelementen 358 und 368 der Versteifungselemente 352 bzw. 362 verbindbar sind, um somit dem Kastenkörper 224' die optimale Steifigkeit zu verleihen.

Dabei weisen die Wandelemente 232 und 234 die größte Verformungssteifigkeit für die plastische Verformung auf, während die Wandelemente 354, 364 sowie 356 und 366 eine geringere Verformungssteifigkeit für die plastische Verformung aufweisen.

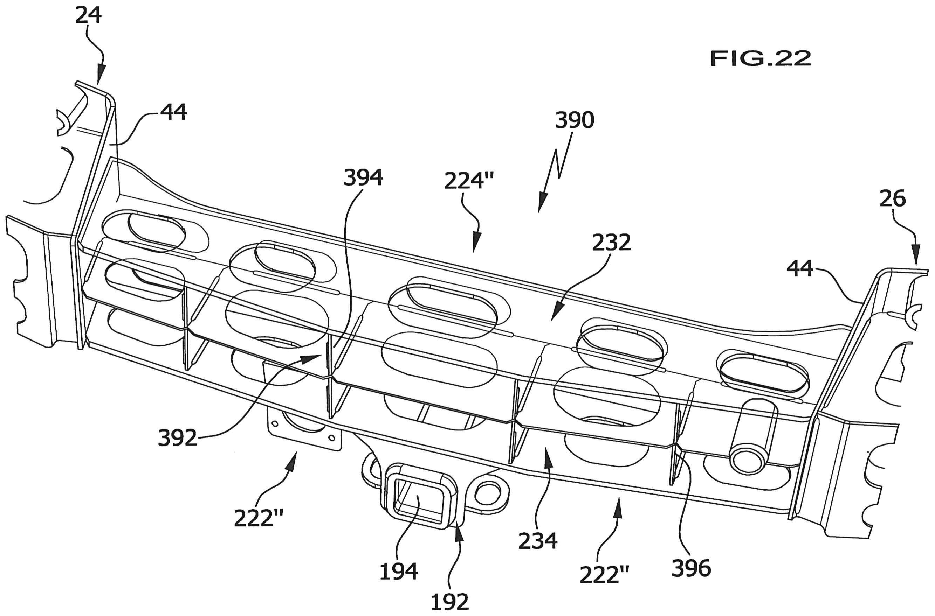

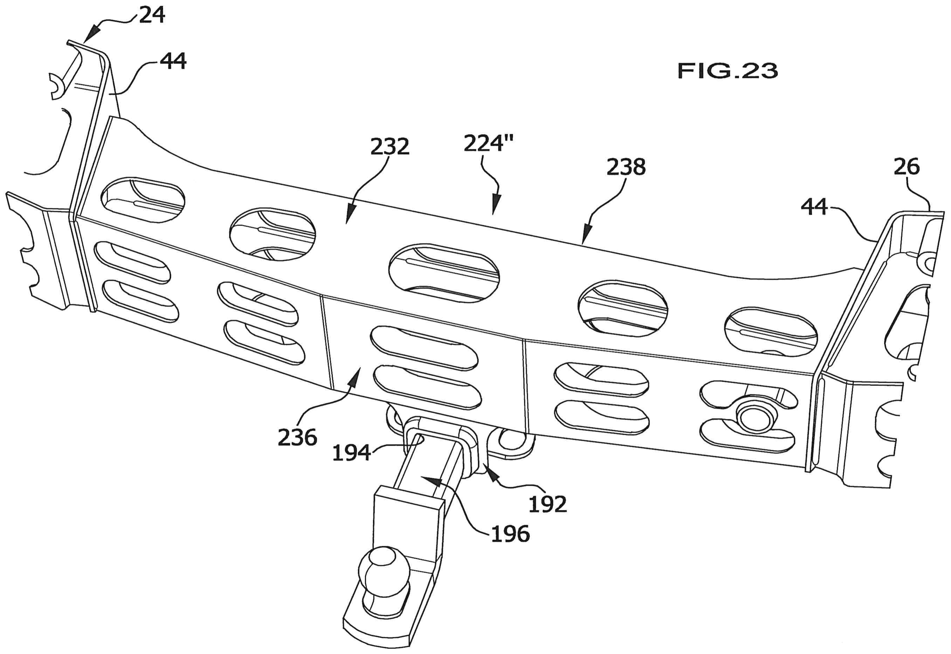

Bei einer sechsten Variante 390 der erfindungsgemäßen Heckaufpralleinheit 20 umfasst der Mittelträger 392 ebenfalls ein fahrbahnabgewandtes Wandelement 232 und ein fahrbahnzugewandtes Wandelement 234, die jeweils mit der inneren Strebenstruktur 44 der Kastenstrukturen 24 und 26 verbunden sind (Fig. 22, 23).

Zwischen diesen Wandelementen 232 und 234 liegt ein sich ungefähr parallel zu diesen erstreckendes mittiges Wandelement 392, das ebenfalls mit den Strebenstrukturen 44 und 46 der Kastenstrukturen 24 und 26 verbunden ist.

Außerdem umfasst der Kastenkörper 224", wie insbesondere in Fig. 23 dargestellt, das fahrzeugabgewandte Wandelement 236 und das fahrzeugzugewandte Wandelement 238.

Zur zusätzlichen Versteifung sind zwischen dem fahrbahnabgewandten Wandelement 232 und dem mittigen Wandelement 392 noch diese miteinander verbindende Versteifungselemente 394 vorgesehen sowie zwischen dem fahrbahnzugewandten Wandelement 234 und dem mittigen Wandelement zusätzliche Versteifungselemente 396.

Dabei sind mindestens zwei, vorzugsweise vier, derartige Versteifungselemente 394 und 396 im Abstand voneinander angeordnet.

In diesem Fall trägt der Mittelträger 222" beispielsweise ebenfalls einen Aufnahmekörper 192 mit einer Aufnahme 194 für einen in Fig. 23 dargestellten Einsteckabschnitt 196, in diesem Fall den Einsteckabschnitt 196 eines Kupplungselements für einen Anhänger.

Der Aufnahmekörper 192 ist bei dem dargestellten Ausführungsbeispiel an dem fahrbahnzugewandten Wandelement 234 gehalten.

Es besteht aber auch die Möglichkeit, den Aufnahmekörper 192 zwischen dem fahrbahnabgewandten Wandelement 232 und dem fahrbahnzugewandten Wandelement 234 anzuordnen und die Aufnahme 194 durch eine Öffnung in dem fahrzeugabgewandten Wandelement 236 zugänglich zu machen.

Dabei weisen die Wandelemente 232, 234 und 392 die größte Verformungssteifigkeit für die plastische Verformung auf, während die Wandelemente 236, 238 eine geringere Verformungssteifigkeit für die plastische Verformung aufweisen.

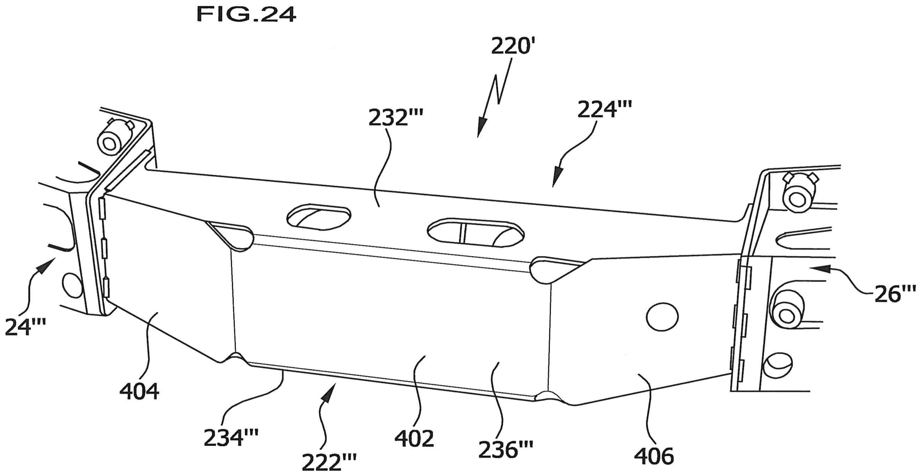

Bei einer siebten Variante 220' einer erfindungsgemäßen Heckaufpralleinheit, dargestellt in Fig. 24, unterscheidet sich der Mittelträger 222‴ vom Mittelträger 22 gemäß dem ersten Ausführungsbeispiel dadurch, dass dieser als Kastenkörper 224"' ausgebildet ist, wobei das fahrbahnabgewandte Wandelement 232‴, das fahrzeugabgewandte Wandelement 236‴ und das fahrbahnzugewandte Wandelement 234‴ aus einem einstückigen Teil, beispielsweise einer Materialtafel, C-förmig, beispielsweise durch Umbiegen, geformt sind, wobei die beiden Schenkel des C durch das fahrbahnabgewandte Wandelement 232‴ und das fahrbahnzugewandte Wandelement 234‴ und der Mittelschenkel des C durch das fahrzeugabgewandte Element 236‴ gebildet sind.

Insbesondere ist in diesem Fall ein Mittelteil 402 des fahrzeugabgewandten Wandelements 236 einstückig mit dem fahrbahnabgewandten Wandelement 232‴ und dem fahrbahnzugewandten Wandelement 234" verbunden, während Seitenteile 404 und 406, die beiderseits des Mittelteils 402 liegen, mit dem fahrbahnabgewandten Wandelement 232‴ und dem fahrbahnzugewandten Wandelement 234"' verschweißt sind, da die Wandelemente 232"' und 234‴ beiderseits der Umbiegung 408 des Mittelteils 402 sich in Richtung der Kastenstrukturen 24 und 26 verjüngen und somit eine gegenüber der Umbiegung 408 in Richtung der Kastenstrukturen 24 und 26 zunehmend zurückgesetzte fahrzeugabgewandte Kante 412 und 414 aufweisen.

Somit erstrecken sich die Seitenteile 404 und 406 in Flächen, die in einem Winkelbereich von beispielsweise 10° bis 30° relativ zum Mittelteil 402 verlaufen.

Dabei sind insbesondere die Seitenteile 404 und 406 längs einer Kante 416 bzw. 418 gegenüber dem Mittelteil 402 umgebogen, so dass dadurch eine Stabilisierung des fahrbahnabgewandten Wandelements 232‴, des fahrbahnzugewandten Wandelements 234"' und des fahrzeugabgewandten Wandelements 236‴ relativ zueinander erfolgt.

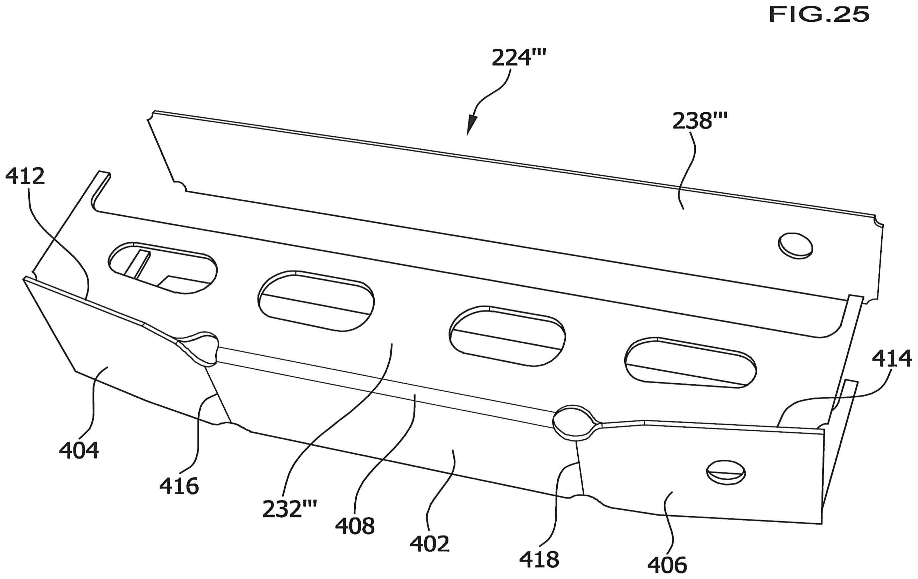

Zusätzlich werden das fahrbahnabgewandte Wandelement 232‴ und das fahrbahnzugewandte Wandelement 234‴, wie in Fig. 25 dargestellt, durch ein mit diesen verschweißtes fahrzeugzugewandtes Wandelement 238"' zusätzlich stabilisiert, so dass insgesamt ein geschlossener Kastenkörper 224‴ entsteht, an den sich jeweils die Kastenstrukturen 24 und 26 gemäß einem der voranstehenden Ausführungsbeispiele anschließen.

Dabei weisen die Wandelemente 232‴ und 234‴ die größte Verformungssteifigkeit für die plastische Verformung auf, während die Wandelemente 236"' und 238"' eine geringere Verformungssteifigkeit für die plastische Verformung aufweisen.

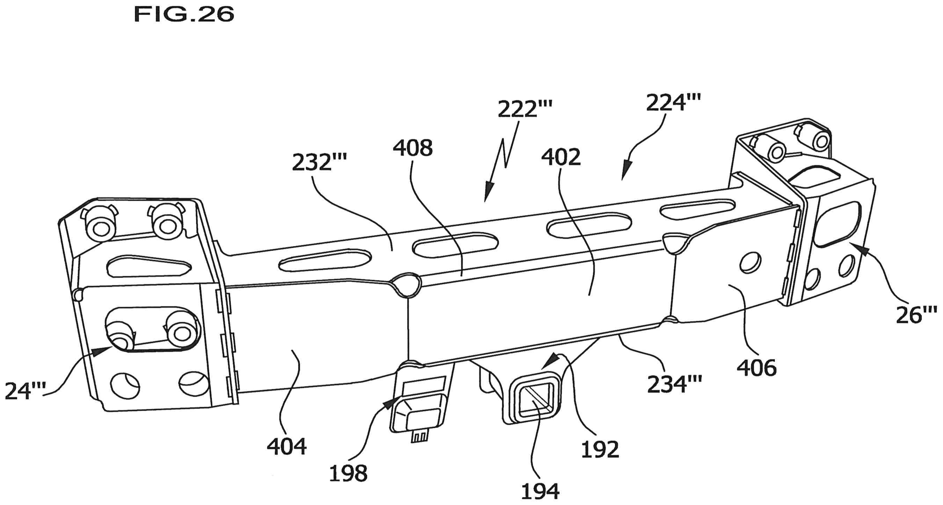

Wird beispielsweise ein derartiger Mittelträger 222‴ zwischen die Kastenstrukturen 24"' und 26"' eingesetzt und mit diesen verbunden, so besteht die Möglichkeit, in gleicher Weise wie im Zusammenhang mit Fig. 13 bereits erläutert, einen Aufnahmekörper 192 an dem Mittelträger 222"' anzuordnen, dessen Aufnahme 194 für einen Einsteckabschnitt 196 eines Kupplungselements für einen Anhänger oder einen Lastenträger geeignet ist (Fig. 26), wobei die Aufnahme 192 entweder fest mit dem Mittelträger 222‴ verbunden sein kann oder relativ zu diesem bewegbar gelagert sein kann.

Des Weiteren besteht auch noch die Möglichkeit, neben dem Aufnahmekörper 192 eine Steckdose 198 vorzusehen.

Dabei ist vorzugweise der Aufnahmekörper 192, wie in Fig. 26 dargestellt, an dem fahrbahnzugewandten Wandelement 234"' gehalten.

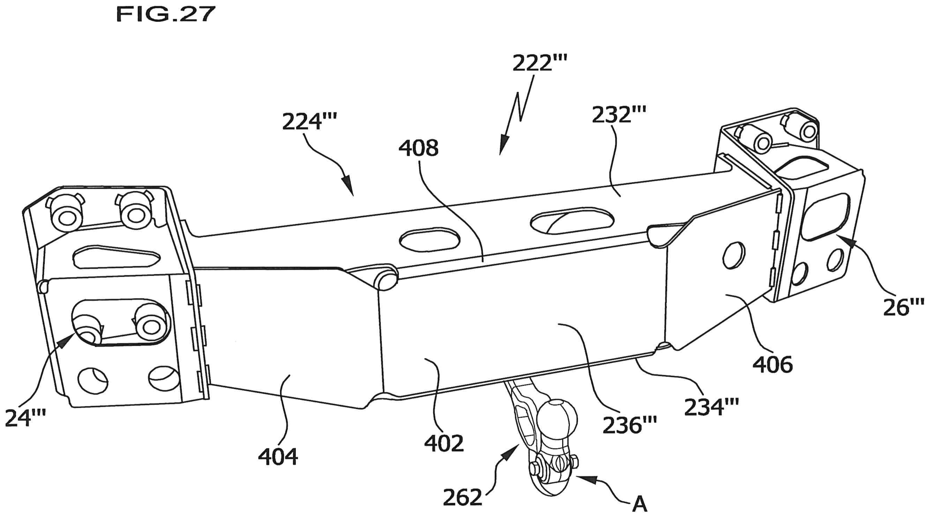

Bei einem weiteren Ausführungsbeispiel des Mittelträgers 222"' ist die Möglichkeit geschaffen, einen schwenkbaren Kugelhals 206 vorzusehen, welcher von einer Arbeitsstellung A in eine Ruhestellung R verschwenkbar ist, die innerhalb des Mittelträgers 222"' und somit innerhalb des Kastenkörpers 224"' liegt (Fig. 27).

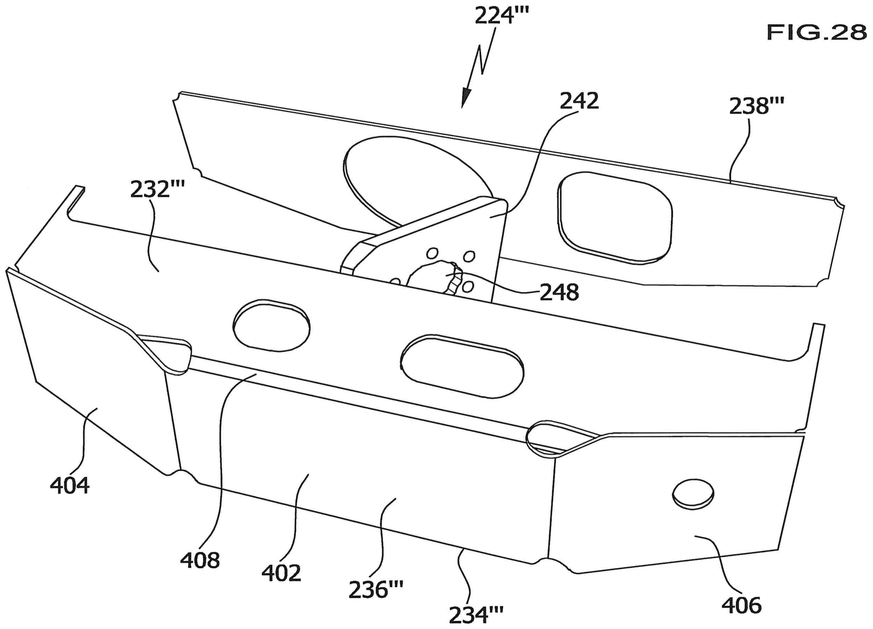

Zur Lagerung des schwenkbaren Kugelhalses 206 ist, wie in Fig. 28 dargestellt, in dem Kastenkörper 224"' selbst der Montageflansch 242 angeordnet, welcher gleichzeitig zur Aussteifung des Kastenkörpers 224"' dient, wobei der Montageflansch 242 sowohl mit dem fahrbahnabgewandten Wandelement 232"', dem fahrbahnzugewandten Wandelement 234‴, dem fahrzeugabgewandten Wandelement 236"' und dem fahrzeugzugewandten Wandelement 238"' durch eine Schweißverbindung verbunden ist und somit auch zur Aussteifung des Kastenkörpers 224‴ beiträgt.

Hinsichtlich der weiteren Merkmale dieses Ausführungsbeispiels wird auf die Ausführungen zu den voranstehenden Ausführungsbeispielen vollinhaltlich Bezug genommen.

An diesem Montageflansch 242 ist dabei die Schwenkeinheit 202 für den schwenkbaren Kugelhals 206 angeordnet, in gleicher Weise wie dies im Zusammenhang mit dem Ausführungsbeispiel gemäß Fig. 17 und Fig. 18 beschrieben ist.

Ferner ist auch, wie beispielsweise im Zusammenhang mit dem Ausführungsbeispiel gemäß Fig. 17 beschrieben und zeichnerisch dargestellt, das fahrbahnzugewandte Wandelement 234‴ mit der Öffnung 276 versehen, die es erlaubt, den schwenkbaren Kugelhals 206 zur Bewegung in der Ruhestellung in den Kastenkörper 224"' hineinzubewegen.

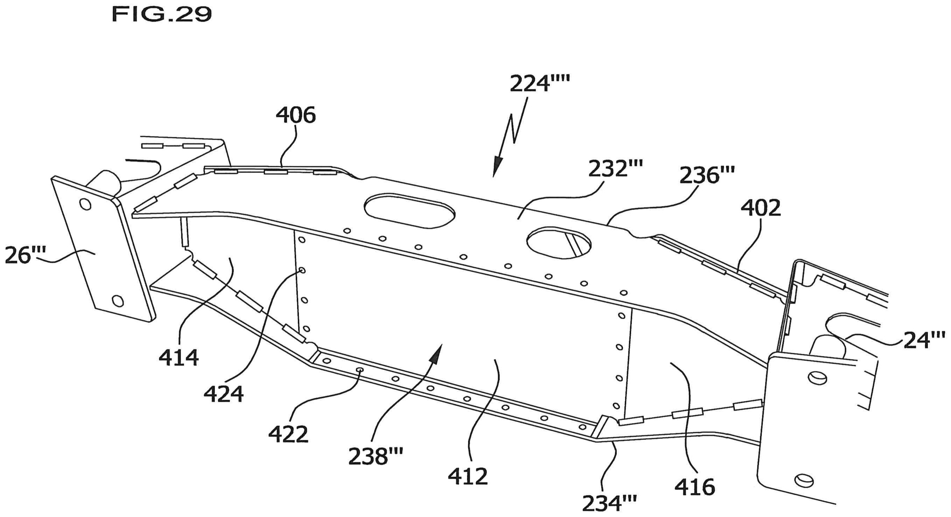

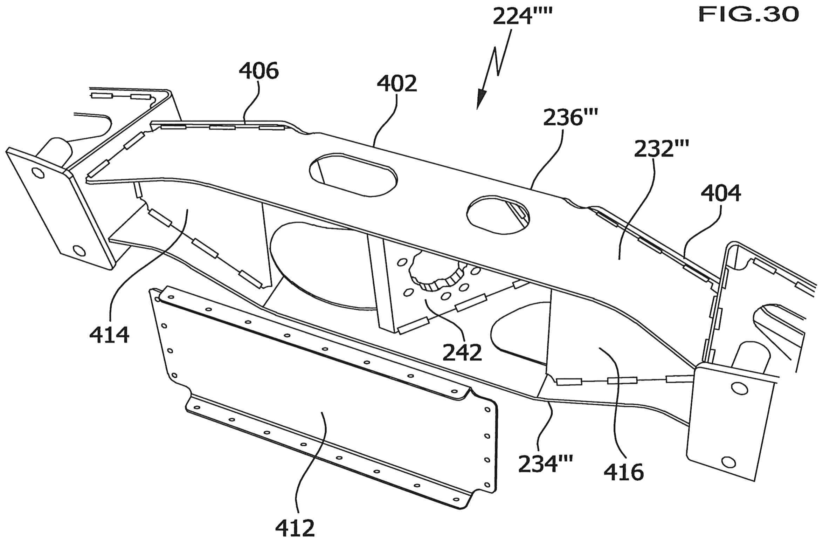

Bei einer achten Variante der Heckaufpralleinheit, dargestellt in den Fig. 29 und 30, ist der Kastenkörper 224"" ebenfalls aus dem fahrbahnabgewandten Wandelement 232"' und dem fahrbahnzugewandten Wandelement 234"' sowie dem fahrzeugabgewandten Wandelement 236"' gebildet, wie im Zusammenhang mit den beiden voranstehenden Ausführungsbeispielen erläutert.

Allerdings ist das fahrzeugzugewandte Element 238ʺʺ nicht aus einem Stück gebildet, sondern aus einem Mittelteil 412 und zwei Seitenteilen 414 und 416, wobei die Seitenteile 414 und 416 jeweils mit dem fahrbahnabgewandten Wandelement 232‴ und dem fahrbahnzugewandten Wandelement 234‴ verschweißt sind, während das Mittelteil 412 mit einzelnen Verbindungselementen 422 sowohl mit dem fahrbahnabgewandten Wandelement 232"' und dem fahrbahnzugewandten Wandelement 234‴ verbunden ist und außerdem noch mit Verbindungselementen 424 mit den Seitenteilen 414 und 416 verbunden ist.

Diese Lösung schafft die Möglichkeit, die Kastenkörper 224ʺʺ so auszubilden, dass zunächst die Seitenteile 414 und 416 jeweils mit dem fahrbahnabgewandten Wandelement 232"' und dem fahrbahnzugewandten Wandelement 234‴ fest verbunden werden und danach noch die Option besteht, den Montageflansch 242 zwischen dem fahrbahnabgewandten Wandelement 232"' und dem fahrbahnzugewandten Wandelement 234‴ einzusetzen und zu verschweißen und gegebenenfalls auch noch die Schwenkeinheit 202 mit dem schwenkbaren Kugelhals 206 an dem Montageflansch 242 zu montieren und nachfolgend das Mittelteil 412 einzusetzen und sowohl mit dem fahrbahnabgewandten Wandelement 232"' und dem fahrbahnzugewandten Wandelement 234‴ mittels der Verbindungselemente 422 zu verbinden und gegebenenfalls auch noch das Mittelteil 412 mit den Seitenteilen 414 und 416 zu verbinden, um damit eine zusätzliche Versteifung der Kastenstruktur 224ʺʺ zu erreichen.

Dabei weisen die Wandelementen 232‴ und 234‴ die größte Verformungssteifigkeit für die plastische Verformung auf, während die Wandelemente 236"' und 238"' eine geringere Verformungssteifigkeit für die plastische Verformung aufweisen.

## Patentansprüche

1. Heckaufpralleinheit (20), welche an einem Fahrzeugheck (14) verdeckt durch eine Stoßfängereinheit (16) montiert oder montierbar ist und welche sich quer zu einer Fahrzeuglängsrichtung (36) sowie quer zu einer Fahrzeuglängsmittelebene (18) erstreckt, **dadurch gekennzeichnet, dass** die Heckaufpralleinheit (20) zwei im Abstand voneinander angeordnete Kastenstrukturen (24, 26) und einen zwischen diesen angeordneten und diese miteinander verbindenden Mittelträger (22) umfasst, dass eine Querträgereinheit (30) aus Mittelträger (22) und Kastenstrukturen (24, 26) durch Fixieren der Kastenstrukturen (24, 26) an dem Fahrzeugheck (14) montierbar ist und dass sich die Kastenstrukturen (24, 26) an dem Fahrzeugheck (14) mit an diesem montierbaren Montageelementen (32) abstützen, welche die im Crash-fall deformierbare Querträgereinheit (30) tragen.

2. Heckaufpralleinheit (20) nach Anspruch 1, **dadurch gekennzeichnet, dass** der Mittelträger (22) fest mit den Kastenstrukturen (24, 26) verbunden ist und dass insbesondere auf diesen einwirkende Kräfte in die Kastenstrukturen (24, 26) von diesen gegebenenfalls in das Fahrzeugheck (14) eingeleitet werden.

3. Heckaufpralleinheit (20) nach einem der voranstehenden Ansprüche, **dadurch gekennzeichnet, dass** das Montageelement (32) eine an eine Montagefläche (34) des Fahrzeughecks (14) angepasste Stützfläche (62) aufweist.

4. Heckaufpralleinheit (20) nach einem der Ansprüche 1 bis 3, **dadurch gekennzeichnet, dass** das Montageelement (32) mehrere, die Stützfläche (62) bildende zusammenhängende Stützsegmente (64, 66, 72, 74) aufweist.

5. Heckaufpralleinheit (20) nach einem der voranstehenden Ansprüche, **dadurch gekennzeichnet, dass** jede Kastenstruktur (24, 26) ein dem Montageelement (32) abgewandtes Aufprallelement (48) aufweist, insbesondere dass das jeweilige Aufprallelement (48) durch zusammenhängende Aufprallsegmente (152, 154, 156, 158) gebildet ist.

6. Heckaufpralleinheit (20) nach einem der voranstehenden Ansprüche, **dadurch gekennzeichnet, dass** die Kastenstrukturen (24, 26) jeweils zwischen dem Aufprallelement (48) und dem Montageelement (32) angeordnete Strebenelemente (44, 46, 54, 56) aufweisen, insbesondere dass die Kastenstrukturen (24, 26) jeweils mindestens zwei im Abstand voneinander zwischen dem Aufprallelement (48) und dem Montageelement (32) verlaufende Strebenelemente (44, 46) aufweisen und/oder dass insbesondere mindestens eines der Strebenelemente (44) dem Mittelträger (22) zugewandt und mit diesem verbunden ist und/oder dass insbesondere mindestens eines der Strebenelemente (44, 46) quer zu der Erstreckungsrichtung (28) des Mittelträgers (22) verläuft und/oder dass insbesondere die Kastenstrukturen (24, 26) mindestens zwei im Abstand voneinander angeordnete und quer zur Erstreckungsrichtung (28) des Mittelträgers (22) verlaufende Strebenelemente (44, 46) aufweisen.

7. Heckaufpralleinheit (20) nach einem der voranstehenden Ansprüche, **dadurch gekennzeichnet, dass** die Kastenstrukturen (24, 26) mindestens ein ungefähr parallel zu der Erstreckungsrichtung (28) des Mittelträgers (22) verlaufendes Strebenelement (54, 56) aufweisen, insbesondere dass jede der Kastenstrukturen (24, 26) mindestens zwei im Abstand voneinander angeordnete und ungefähr parallel zur Erstreckungsrichtung (28) des Mittelträgers (22) verlaufende Strebenelemente (54, 56) aufweist.

8. Heckaufpralleinheit (20) nach einem der voranstehenden Ansprüche, **dadurch gekennzeichnet, dass** das Montageelement (32) eine größere Verformungssteifigkeit für die plastische Verformung als alle Strebenelemente (44, 46, 54, 56) der Kastenstrukturen (24, 26) aufweist, insbesondere dass mindestens eines der quer zur Erstreckungsrichtung (28) des Mittelträgers (22) verlaufenden Strebenelemente (44, 46) eine größere Verformungssteifigkeit für die plastische Verformung aufweist als mindestens eines der ungefähr parallel zur Erstreckungsrichtung (28) des Mittelträgers (22) verlaufenden Strebenelemente (54, 56).

9. Heckaufpralleinheit (20) nach einem der voranstehenden Ansprüche, **dadurch gekennzeichnet, dass** das Aufprallelement (48) eine geringere Verformungssteifigkeit für die plastische Verformung aufweist als das Montageelement (32) und/oder dass insbesondere das Aufprallelement (48) eine geringere Verformungssteifigkeit für die plastische Verformung aufweist als das mindestens eine sich quer zur Erstreckungsrichtung (28) des Mittelträgers (22) erstreckende Strebenelement (44).

10. Heckaufpralleinheit (20) nach einem der voranstehenden Ansprüche, **dadurch gekennzeichnet, dass** mindestens eines der Strebenelemente (44, 46, 54, 56) um einen Durchbruch (76) herum verlaufende Strebensegmente (110, 112, 114, 116) aufweist, insbesondere dass jedes Strebenelement (44, 46, 54, 56) um einen Durchbruch (110, 112, 114, 116) herum angeordnete Strebensegmente (92, 94, 96, 98, 122, 124, 126, 128, 132, 134, 136, 138) aufweist.

11. Heckaufpralleinheit (20) nach einem der voranstehenden Ansprüche, **dadurch gekennzeichnet, dass** das Montageelement (32) um einen Durchbruch (76) herum verlaufende flächig ausgebildete Stützsegmente (64, 66, 72, 74) aufweist und/oder dass insbesondere das Aufprallelement (48) um einen Durchbruch (162) herum verlaufende flächig ausgebildete Aufprallsegmente (152, 154, 156, 158) aufweist.

12. Heckaufpralleinheit (20) nach einem der voranstehenden Ansprüche, **dadurch gekennzeichnet, dass** das den Mittelträger (22) tragende Strebenelement (44) einstückig mit dem Montageelement (32) verbunden ist oder dass der Mittelträger (22) mit den Strebensegmenten (92, 96, 102, 104) des diesen tragenden Strebenelements (44) formschlüssig und/oder stoffschlüssig verbunden ist.

13. Heckaufpralleinheit (20) nach einem der voranstehenden Ansprüche, **dadurch gekennzeichnet, dass** das Montageelement (32) eine größere Flächendehnung aufweist als das Aufprallelement (48).

14. Heckaufpralleinheit (20) nach einem der Ansprüche 6 bis 13, **dadurch gekennzeichnet, dass** die Strebensegmente (92, 94, 96, 98) der sich zwischen dem Aufprallelement (48) und dem Montageelement (32) erstreckenden Strebenelemente (44, 46) mit Bereichen des Montageelements (32) verbunden sind, in denen Montagepunkte (82, 84, 86, 88) zur Fixierung des jeweiligen Montageelements (32) an dem Fahrzeugheck (14) liegen.

15. Heckaufpralleinheit (20) nach einem der Ansprüche 6 bis 14, **dadurch gekennzeichnet, dass** das Montageelement (32) mit mindestens einem Strebenelement (44, 46) einstückig verbunden ist und/oder dass insbesondere das Aufprallelement (48) mit mindestens einem Strebenelement (44, 46) einstückig verbunden ist.

16. Heckaufpralleinheit (20) nach einem der Ansprüche 6 bis 15, **dadurch gekennzeichnet, dass** die Strebenelemente (44, 46, 54, 56) einen zwischen dem Aufprallelement (48) und dem Montageelement (32) liegenden Hohlraum (142) umschließen.

17. Heckaufpralleinheit (20) nach einem der voranstehenden Ansprüche, **dadurch gekennzeichnet, dass** der Mittelträger (22) ein sich zwischen den Kastenstrukturen (24, 26) erstreckendes rohrähnliches oder als Profilelement ausgebildetes Teil ist.

18. Heckaufpralleinheit (20) nach einem der Ansprüche 1 bis 17 **dadurch gekennzeichnet, dass** der Mittelträger (222) als Kastenkörper (224) ausgebildet ist, insbesondere dass der Mittelträger (22) ein fahrbahnabgewandtes Wandelement (232) und ein fahrbahnzugewandtes Wandelement (234) aufweist und/oder dass insbesondere der Mittelträger (222) ein fahrbahnabgewandtes Wandelement (232) aufweist, das sich zwischen den Kastenstrukturen (24, 26) erstreckt und mit diesen verbunden ist und/oder dass insbesondere der Mittelträger (222) ein fahrbahnzugewandte Wandelement (234) aufweist, das sich zwischen den Kastenstrukturen (24, 26) erstreckt und mit diesen verbunden ist und/oder dass insbesondere der Mittelträger (222) ein fahrzeugabgewandtes Wandelement (236) aufweist, das sich zwischen den Kastenstrukturen (24, 26) erstreckt und/oder dass insbesondere der Mittelträger (222) ein fahrzeugzugewandtes Wandelement (238) aufweist, das sich zwischen den Kastenstrukturen (24, 26) erstreckt und/oder dass insbesondere das fahrzeugabgewandte Wandelement (236) und das fahrzeugzugewandte Wandelement (238) durch ein zentral zwischen den Kastenstrukturen (24, 26) liegendes Verbindungsteil (246) miteinander verbunden sind und/oder dass insbesondere das fahrzeugabgewandte Wandelement (236) aus zwei Wandelementteilen (354, 364) gebildet ist und/oder dass insbesondere das fahrzeugzugewandte Wandelement (238) aus zwei Wandelementteilen (356, 366) gebildet ist.

19. Heckaufpralleinheit (20) nach Anspruch 18, **dadurch gekennzeichnet, dass** mindestens ein fahrzeugzugewandtes Wandelementteil (356, 366) und ein diesem gegenüberliegendes fahrzeugabgewandtes Wandelementteil (354, 364) durch ein sich zwischen diesen erstreckendes Verbindungselement (358, 368) verbunden sind, welches diese Wandelementteile (354, 356, 364, 366) im Abstand von den Kastenstrukturen (24, 26) relativ zueinander versteift, insbesondere dass das fahrzeugzugewandte Wandelementteil und das fahrzeugabgewandte Wandelementteil und das Verbindungselement (358, 368) einstückig miteinander verbunden sind und/oder dass insbesondere beide fahrzeugzugewandten Wandelementteile (356, 366) und die jeweils diesen zugewandten fahrzeugabgewandten Wandelementteile (354, 364) jeweils durch ein Verbindungsteil (358, 368) miteinander verbunden sind, dass insbesondere die Verbindungsteile (358, 368) aneinander anliegen und/oder dass insbesondere die Verbindungsteile (358, 368) einen Montageflansch (374) für eine Anhängekupplung bilden.

20. Heckaufpralleinheit (20) nach Anspruch 18 oder 19, **dadurch gekennzeichnet, dass** das die fahrzeugabgewandten Wandelementteile (354, 364) und die fahrzeugzugewandten Wandelementteile (356, 366) durch ein fahrbahnabgewandtes und/oder fahrbahnzugewandtes Wandelement (232, 234) miteinander verbunden sind.

21. Heckaufpralleinheit nach einem der Ansprüche 18 bis 20, **dadurch gekennzeichnet, dass** mindestens ein, insbesondere mehrere Versteifungselemente (394, 396) quer zwischen dem fahrbahnabgewandten Wandelement (232) und dem fahrbahnzugewandten Wandelement (234) verlaufen und/oder dass insbesondere zwischen den fahrbahnzugewandten und den fahrbahnabgewandten Wandelementen (232, 234) sowie den fahrzeugzugewandten und den fahrzeugabgewandten Wandelementen (236, 238) ein mittiges Wandelement (392) angeordnet ist und/oder dass insbesondere mindestens ein, insbesondere mehrere Versteifungselemente (394, 396) quer zu den fahrbahnabgewandten und fahrbahnzugewandten Wandelementen (232, 234) sowie dem mittigen Wandelement (392) verlaufen und/oder dass insbesondere mindestens eines der Wandelemente, umfassend das fahrbahnabgewandte Wandelement (232) und das fahrbahnzugewandte Wandelement (234), mit mindestens einem der Wandelemente, umfassend das fahrzeugabgewandte Wandelement (236) und das fahrzeugzugewandte Wandelement (238), aus einer Materialtafel hergestellt und zumindest abschnittsweise einstückig miteinander verbunden sind, insbesondere dass mindestens drei der Wandelemente (232‴, 234"', 236"', 238‴) aus einer Materialtafel hergestellt und zumindest abschnittsweise einstückig miteinander verbunden sind.

22. Heckaufpralleinheit nach Anspruch 21, **dadurch gekennzeichnet, dass** mindestens eines der Wandelemente (232"', 234‴, 236"', 238‴) mehrteilig ausgebildet ist und ein Mittelteil (402, 412) sowie Seitenteile (404, 406, 414, 416) aufweist, insbesondere dass die Seitenteile (404, 406, 414, 416) mit zwei einander gegenüberliegenden Wandelementen (232‴, 234‴) fest verbunden, insbesondere verschweißt, sind und/oder dass insbesondere eines der Mittelteile (402) einstückig mit mindestens einem der an dieses anschließenden Wandelemente (232‴, 234‴) verbunden ist und/oder dass insbesondere die Seitenteile (404, 406, 414, 416) außerhalb einer durch das Mittelteil (402, 412) vorgegebenen Fläche verlaufen und/oder dass insbesondere die Seitenteile (404, 406, 414, 416) relativ zu dem Mittelteil (402, 412) gebogen sind und/oder dass insbesondere die Seitenteile (404, 406, 414, 416) einstückig mit einem der Mittelteile (402, 412) verbunden sind und/oder dass insbesondere mindestens eines der Mittelteile (412) mit den Seitenteilen (414, 416) durch Formschlusselemente (424) verbunden ist und/oder dass insbesondere mindestens eines der Mittelteile (412) durch Formschlusselemente (422) mit mindestens einem der Wandelemente (232"', 234‴) verbunden ist.

23. Heckaufpralleinheit nach einem der Ansprüche 18 bis 22, **dadurch gekennzeichnet, dass** das fahrbahnabgewandte Wandelement (232) und das fahrbahnzugewandte Wandelement (234) eine größere Verformungssteifigkeit für die plastische Verformung aufweisen als das fahrzeugabgewandte Wandelement (236) und das fahrzeugzugewandte Wandelement (238).
